(19) Europäisches Patentamt / European Patent Office / Office européen des brevets

(11) EP 4 560 384 A1

(12) EUROPEAN PATENT APPLICATION
published in accordance with Art. 153(4) EPC

(43) Date of publication:
28.05.2025 Bulletin 2025/22

(51) International Patent Classification (IPC):
$G02C\ 7/02^{(2006.01)}$    $G02C\ 7/06^{(2006.01)}$

(21) Application number: 23842993.0

(52) Cooperative Patent Classification (CPC):
G02C 7/02; G02C 7/06

(22) Date of filing: 19.07.2023

(86) International application number:
PCT/JP2023/026353

(87) International publication number:
WO 2024/019070 (25.01.2024 Gazette 2024/04)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 19.07.2022   JP 2022114588

(71) Applicant: Hoya Lens Thailand Ltd.
Pathumthani 12130 (TH)

(72) Inventors:
• MATSUOKA, Shohei
  Tokyo 160-8347 (JP)
• TATEJIMA, Seitaro
  Tokyo 160-8347 (JP)

(74) Representative: Betten & Resch
Patent- und Rechtsanwälte PartGmbB
Maximiliansplatz 14
80333 München (DE)

(54) **DESIGN METHOD FOR EYEGLASS LENS, PRODUCTION METHOD FOR EYEGLASS LENS, EYEGLASS LENS, AND EYEGLASSES**

(57)     There are provided a method for designing a spectacle lens and a related technique thereof, the method including: a modeling step of dividing a pattern into multiple models with a deviation from a normally worn state of the spectacle lens as decentering, in which a reference model, a decenter model, and a tilt model are prepared as the multiple model; a sensitivity calculation step of calculating a decenter sensitivity and a tilt sensitivity; and a design step of using a base curve value in the vicinity of a balance solution as a base curve of the spectacle lens, wherein a base curve value c [unit: diopter (D)] which is a curvature of a surface in a region H where the on-retinal non-convergence region is not provided on an object-side surface is taken as x-axis, and the decenter sensitivity and the tilt sensitivity [unit: diopter (D)] are taken as y-axis, and an intersection of a plot of the decenter sensitivity and a plot of the tilt sensitivity is taken as the balance solution.

FIG. 11

EP 4 560 384 A1

## Description

Technical Field

The present invention relates to a method for designing a spectacle lens, a method for manufacturing a spectacle lens, a spectacle lens, and eyeglasses.

Description of related art

As a spectacle lens for suppressing a progression of refractive errors such as myopia, there is a lens having a plurality of island-shaped regions (in other words, "second refractive regions" or "minute convex parts") formed thereon, each of which has a refractive power that is more positive than a prescribed refractive power (for example, see Patent Document 1). In the Patent Document 1, the region that provides a prescribed refractive power is a first refractive region, which is also called a base region.

The spectacle lens having this configuration is configured as follows. Among the light beams that enter from an object-side surface and exit from an eyeball-side surface, those that pass through other than the minute convex parts are focused on a wearer's retina, but those that pass through the minute convex parts are focused in front of the retina, thereby inhibiting a progression of myopia.

In [0094] of Patent Document 2, it is described that by changing the minute convex parts to concave parts, a spectacle lens that has a function of inhibiting a progression of hyperopia can be obtained. In this specification, the above-described myopia progression inhibiting effect and hyperopia progression inhibiting effect (more precisely, hyperopia reducing effect) are collectively referred to as a refractive error progression inhibiting effect. The effect of inhibiting the progression of myopia will be exemplified below.

Claim 1 of the Patent Document 3 shows a lens element intended to be worn in front of a person's eye, including a refractive area having a refractive power based on a prescription for a human eye, and a plurality of at least three optical elements, the optical elements being configured such that, a mean sphere of the optical element increases from a point of a section toward a periphery of the section along at least one section of the lens.

Prior art document

Patent document

[Patent Document 1] U.S. Patent Publication No. 2017/0131567
[Patent Document 2] WO2020/067028
[Patent Document 3] WO2019/166655

Summary of the invention

Problem to be solved by the invention

Those who wear the spectacle lenses for inhibiting the progression of myopia shown in FIG. 1 of Patent document 1 or FIG. 1 of Patent document 3 are mainly children or infants for whom it is still not too late to inhibit the progression of myopia.

Children and infants have lower noses than adults, and so the lenses of their eyeglasses tend to slip off when worn. Further, although the eyeglasses and frames are adjusted so that the line of sight passes through an eyepoint of the spectacle lens (described later) when the eyeglasses are worn, there is a risk that the spectacle lens may slip up from its original set position when the eyeglasses are worn, due to a growth of a nasal bone in children and infants. The deviation of the spectacle lens described in this paragraph is also referred to as a "vertical deviation of the lens."

With regular spectacle lenses that are not designed to prevent the progression of refractive errors, even in children or infants, there are almost no problems even when the line of sight deviates from the eyepoint. This is because, with an ordinary spectacle lens, when a positional relationship between wearer's eyes and the eyeglasses is deviated, visibility becomes good somewhere on the spectacle lens by moving the line of sight. Optically speaking, this phenomenon occurs due to cancelling of the aberration caused by the line of sight with respect to the spectacle lens being decentered from the optical axis (i.e., decentering aberration) and off-axis aberration.

On the other hand, as shown in the spectacle lens for inhibiting the progression of myopia in FIG. 1 of Patent document 1 or FIG. 1 of Patent document 3, when a functional region (described later) having a plurality of convex regions is provided around a central clear region (described later) that includes an eye point and satisfies a wearer's prescription power, problems are more likely to be caused. This is because when attempting to cancel decentering aberration and off-axis aberration, and when the line of sight deviates from the eyepoint, the line of sight will leave the clear region and enter the surrounding functional region. This is a phenomenon peculiar to the spectacle lens having a central clear region and a functional region, including the lens having the effect of inhibiting the progression of refractive errors (the effect of inhibiting the progression of myopia or the effect of reducing hyperopia).

An object of one embodiment of the present invention is to provide a technique that makes decenter sensitivity and tilt sensitivity robust against the deviation of the lens in a vertical direction.

In this specification, the term "robust" means that even when the lens is vertically deviated, the generation amount of astigmatism is less likely to be changed than in the past. The decenter sensitivity and the tilt sensitivity will be described in detail later. In this specification, the amount of astigmatism is defined as positive when a vertical diopter is greater than a horizontal diopter, ie, when the amount of astigmatism corresponds to a so-called straight astigmatism.

Means for solving the problem

First aspect of the present invention provides method for designing a spectacle lens that has an effect of inhibiting a progression of myopia or reducing hyperopia, the spectacle lens including: a central clear region that is a region including an eye point, which causes a light beam entering from an object-side surface to exit from an eyeball-side surface, enter a wearer's pupil, and converge on a retina to achieve a prescribed refractive power; and an annular functional region surrounding the central clear region, the functional region including: a base region that allows the light beam entering from the object-side surface to exit from the eyeball-side surface, enter the wearer's pupil, and converge on the retina to achieve the prescribed refractive power; and an on-retinal non-convergence region that allows the light beam entering from the object-side surface to exit from the eyeball-side surface, while not allowing the light beam that enters the wearer's pupil to converge on the retina,

the method including:

a modeling step of dividing a pattern into multiple models with a deviation from a normally worn state of the spectacle lens as decentering,
to prepare the following models as the multiple models:

a reference model that represents a pupil center and a rotation center when observing an object through a central clear region;
a decenter model in which the rotation center and the pupil center of the reference model are translated by the same distance vertically; and
a tilt model in which only the rotation center moves vertically from a reference state by the same amount as a translation amount in the decenter model, and the pupil center does not move from a straight line passing through the rotation center and the pupil center of the reference model;
a sensitivity calculation step of calculating a decenter sensitivity and a tilt sensitivity, wherein a common object surface is set for each model, and a central light beam is set, which is a light beam emitted from a point on the object surface and passing through the pupil center and the rotation center of each of the models, and a difference between an astigmatism of the central light beam in the decenter model and an astigmatism of the central light beam in the reference model is defined as the decenter sensitivity, and a difference between an astigmatism of the central light beam in the tilt model and an astigmatism of the central light beam in the reference model is defined as the tilt sensitivity; and
a design step of using a base curve value in the vicinity of a balance solution as a base curve of the spectacle lens, wherein a base curve value c [unit: diopter (D)] which is a curvature of a surface in a region H where the on-retinal non-convergence region is not provided on an object-side surface is taken as x-axis, and the decenter sensitivity and the tilt sensitivity [unit: diopter (D)] are taken as y-axis, and an intersection of a plot of the decenter sensitivity and a plot of the tilt sensitivity is taken as the balance solution.

Second aspect of the present invention provides the method for designing a spectacle lens according to the first aspect, wherein the base curve of the spectacle lens used in the design step falls within a range with an upper limit being (+ 0.25D when y-axis value in the plot of the tilt model is zero) and a lower limit being a value determined so that the base curve value of the balance solution is an intermediate value.

Third aspect of the present invention provides the method for designing a spectacle lens according to the second aspect,
wherein the design step includes an aspheric correction step of:

performing aspheric correction to at least one of the region H on the object-side surface of the spectacle lens and the region H' on the eyeball-side surface where the on-retinal non-convergence region is not provided; and

moving an intersection of the plots in y-axis direction to bring a value of a generation amount of astigmatism in the balance solution closer to zero.

Fourth aspect of the present invention provides the method for designing a spectacle lens according to the second aspect, the method including:

a base curve determination step of determining a base curve value of the spectacle lens in advance before the design step,

wherein the design step includes an aspheric correction step of performing aspheric correction to at least one of the region H on the object-side surface of the spectacle lens and the region H' on the eyeball-side surface where the on-retinal non-convergence region is not provided; and moving an intersection of the plots in an x-axis direction to bring a base curve value in the balance solution closer to a base curve value determined in the base curve determination step.

Fifth aspect of the present invention provides the method for designing a spectacle lens according to the second aspect, the method including:

a base curve determination step of determining a base curve value of the spectacle lens in advance, before the design step,

wherein the design step includes:

an aspheric correction step of performing aspheric correction to at least one of the region H on the object-side surface of the spectacle lens and the region H' on the eyeball-side surface where the on-retinal non-convergence region is not provided; and moving an intersection of the plots in an x-axis direction to bring the base curve value in the balance solution closer to the base curve value determined in the base curve determination step, and moving the intersection of the plots in a y-axis direction to bring a value of a generation amount of astigmatism in the balance solution closer to zero.

Sixth aspect of the present invention provides the method for designing a spectacle lens according to any one of the third to fifth aspects, wherein the aspheric surface correction step is performed by adding a sag amount including a fourth-order function component to at least one of the region H and the region H'.

Seventh aspect of the present invention provides the method for designing a spectacle lens according to the sixth aspect, wherein in the aspheric correction step, aspheric correction is performed to the region H' on the eyeball-side surface of the spectacle lens.

Eighth aspect of the present invention provides the method for designing a spectacle lens according to the first aspect, wherein the object-side surface is a spherical surface centered on a rotation center of the reference model.

Nineth aspect of the present invention provides a method for producing a spectacle lens having an effect of inhibiting a progression of myopia or reducing hyperopia, the spectacle lens including: a central clear region that is a region including an eye point, which causes a light beam entering from an object-side surface to exit from an eyeball-side surface, enter a wearer's pupil, and converge on a retina to achieve a prescribed refractive power; an annular functional region surrounding the central clear region, the functional region including: a base region that allows the light beam entering from the object-side surface to exit from the eyeball-side surface, enter the wearer's pupil, and converge on the retina to achieve the prescribed refractive power; and an on-retinal non-convergence region that allows the light beam entering from the object-side surface to exit from the eyeball-side surface, while not allowing the light beam to enter the wearer's pupil to converge on the retina,

the method including:

a modeling step of dividing a pattern into multiple models with a deviation from a normally worn state of the spectacle lens as decentering,

to prepare the following models as the multiple models:

a reference model that represents a pupil center and a rotation center when observing an object through a central clear region,

a decenter model in which the rotation center and the pupil center of the reference model are translated by the same distance vertically, and

a tilt model in which only the rotation center moves vertically from a reference state by the same amount as a translation amount in the decenter model, and the pupil center does not move from a straight line passing through the rotation center and the pupil center of the reference model,

a sensitivity calculation step of calculating a decenter sensitivity and a tilt sensitivity,

wherein a common object surface is set for each model,

a central light beam is set, which is a light beam emitted from a point on the object surface and passing through the pupil center and the rotation center of each of the models, and a difference between an astigmatism of the central light beam in the decenter model and an astigmatism of the central light beam in the reference model is defined as the decenter sensitivity, and a difference between an astigmatism of the central light beam in the tilt model and an astigmatism of the central light beam in the reference model is defined as the tilt sensitivity; and

a design step of using a base curve value in the vicinity of a balance solution as a base curve of the spectacle lens, wherein a base curve value c [unit: diopter (D)] which is a curvature of a surface in a region H where the on-retinal non-convergence region is not provided on an object-side surface is taken as x-axis, and the decenter sensitivity and the tilt sensitivity [unit: diopter (D)] are taken as y-axis, and an intersection of a plot of the decenter sensitivity and a plot of the tilt sensitivity is taken as the balance solution; and

a manufacturing step of manufacturing the spectacle lens based on the design step.

Tenth aspect of the present invention provides a spectacle lens that has an effect of inhibiting a progression of myopia or reducing hyperopia, the spectacle lens including:

a central clear region that is a region including an eye point, which causes a light beam entering from an object-side surface to exit from an eyeball-side surface, enter a wearer's pupil, and converge on a retina, to achieve a prescribed refractive power; and

an annular functional region surrounding the central clear region,

the functional region including:

a base region that allows a light beam entering from the object-side surface to exit from the eyeball-side surface, enter the wearer's pupil, and converge on the retina to achieve the prescribed refractive power; and

an on-retinal non-convergence region that allows the light beam entering from the object-side surface to exit from the eyeball-side surface, while not allowing the light beam to enter the wearer's pupil to converge on the retina, wherein in a planar view, an outer edge of the functional region is larger than a circle centering on the eyepoint and having a diameter of 35 mm, and

a base curve value c [unit: diopter (D)] which is a curvature of a surface in a region H where the on-retinal non-convergence region is not provided on the object-side surface satisfies the following formula:

$$2Cs-Ct-0.25 \leq c \leq Ct+0.25$$

$Cs=11.4(N-1)+0.65S$
$Ct=13.8(N-1)+0.65S$
N: refractive index of spectacle lens
S: vertical refractive power in region H.

Eleventh aspect of the present invention provides the spectacle lens according to the tenth aspect, wherein the value c in the region H satisfies the following formula:

$$Cs-0.25 \leq c \leq Ct+0.25.$$

Twelfth aspect of the present invention provides the spectacle lens according to the eleventh aspect, wherein the value c in the region H satisfies the following formula:

$$2Cs+2a \cdot As-2Ct-a \cdot At-0.25 \leq c \leq Ct+a \cdot At+0.25$$

$$As=(24.9+1.96S)(N-1)^2$$

$$At=(9.7+0.65S)(N-1)^2.$$

Thirteenth aspect of the present invention provides the spectacle lens according to the twelfth aspect, wherein the value c in the region H satisfies the following formula:

$$Cs+a \cdot As-0.25 \le c \le Ct+a \cdot At+0.25.$$

Fourteenth aspect of the present invention provides the spectacle lens according to the twelfth aspect, wherein the value c in the region H satisfies the following formula:

$$|(Cs+a \cdot As)-(Ct+a \cdot At)| \le 0.25.$$

Fifteenth aspect of the present invention provides the spectacle lens according to the tenth aspect, wherein in a planar view, the central clear region is sized to encompass a circle having a diameter of 4 mm centered on an eye point, and is sized to be encompassed within a circle having a diameter of 16 mm centered on the eye point.
Sixteenth aspect of the present invention provides the spectacle lens according to the fifteenth aspect, wherein an area of the on-retinal non-convergence region in a planar view in the functional region is 20% or more and 80% or less of an entire functional region.
Seventeenth aspect of the present invention provides the spectacle lens according to the sixteenth aspect, wherein the value c in the region H satisfies the following formula:

$$Cs-0.25 \le c \le Ct+0.25$$

$$Cs+2a.As-0.25 \le c \le Ct+a.At+0.25$$

$$|(Cs+a.As)-(Ct+a.At)| \le 0.25$$

$$As=(24.9+1.96S)(N-1)^2$$

$$At=(9.7+0.65S)(N-1)^2.$$

Eighteenth aspect of the present invention provides a pair of eyeglasses including the spectacle lens according to any one of the tenth to seventeenth aspects and a frame.

Advantage of the invention

In one embodiment of the present invention, decenter and tilt sensitivities are robust against the deviation of the lens in a vertical direction.

Brief description of the drawings

FIG. 1 is a schematic planar view of a spectacle lens according to one embodiment of the present invention.
FIG. 2 is a schematic view showing how light beams L1, L2, and L3 from a vertical upper side (+Y direction), a vertical center (optical axis), and a vertical lower side (-Y direction) pass through a conventional general spectacle lens that does not have an effect of suppressing the progression of refractive error.
FIG. 3 is a schematic view showing how light beams L1, L2, and L3 from the vertical upper side (+Y direction), the vertical center (optical axis), and the vertical lower side (-Y direction) pass through a central clear region of a spectacle lens that has an effect of inhibiting the progression of myopia.
FIG. 4 is a schematic view (decenter model) showing how light beams L1, L2, and L3 from the vertical upper side (+Y direction), the vertical center (optical axis), and the vertical lower side (-Y direction) pass through a conventional general spectacle lens that does not have an effect of suppressing the progression of refractive error.
FIG. 5 is a schematic view (tilt model) showing how light beams L1, L2, and L3 from the vertical upper side (+Y direction), the vertical center (optical axis), and the vertical lower side (-Y direction) pass through a conventional general spectacle lens that does not have an effect of suppressing the progression of refractive error.
FIG. 6 is an explanatory view of a decenter model.
FIG. 7 is an explanatory view of a tilt model.

FIG. 8 is a plot (without aspheric correction) showing a relationship when a refractive index of the spectacle lens is 1.5, with the horizontal axis representing vertical dioptric power S [D] and the vertical axis representing Cs and Ct (i.e., the base curve values).

FIG. 9 is a plot (without aspheric correction) showing a relationship when a refractive index of the spectacle lens is 1.6, with the horizontal axis representing vertical dioptric power S [D] and the vertical axis representing Cs and Ct (i.e., the base curve values).

FIG. 10 is a plot showing a relationship when the refractive index of the spectacle lens is 1.6 (with aspheric correction, sag coefficient is -0.74), with the horizontal axis representing the vertical refractive power S [D] and the vertical axis representing Cs and Ct (i.e., the base curve values).

FIG. 11 is a model plot of Example 1 before aspheric correction.

FIG. 12 is a model plot of Example 1 after aspheric correction.

FIG. 13 is a model plot of Example 2 before aspheric correction.

FIG. 14 is a model plot of Example 2 after aspheric correction.

Detailed description of the invention

Preferable embodiments of the present invention will be described below with reference to the accompanying drawings. The following description based on the drawings is merely illustrative, and the present invention is not limited to the illustrated embodiments.

The spectacle lens described in this specification has an object-side surface and an eyeball-side surface. The "object-side surface" is the surface that is located on the object side when eyeglasses equipped with the spectacle lens are worn by a wearer, and the "eyeball-side surface" is the opposite, i.e., the surface that is located on the eyeball side when eyeglasses equipped with the spectacle lens are worn by a wearer. This relationship also applies to a lens substrate that forms the basis of the spectacle lens. That is, the lens substrate also has an object-side surface and an eyeball-side surface.

In this specification, when the spectacle lens is worn, the horizontal direction is defined as the X direction, the top-bottom direction is defined as the Y direction, and the thickness direction of the spectacle lens which is perpendicular to the X and Y directions is defined as the Z direction. The Z direction is also the optical axis direction of the spectacle lens. An origin is a lens center, which refers to an optical center or geometric center of the spectacle lens. This specification shows a case where the optical center and the geometric center substantially coincide with each other.

Facing the wearer, the right (3 o'clock direction) is the +X direction, the left (9 o'clock direction) is the -X direction, the top (0 o'clock direction) is the +Y direction, the bottom (6 o'clock direction) is the -Y direction, the direction toward the object side is the -Z direction, and the opposite direction (toward the back) is the +Z direction. In this specification, "planar view" refers to a state when viewed from the -Z direction to the +Z direction. A defocus power described later also follows Z direction sign. The -Y direction to +Y direction is also called a "vertical direction."

Each drawing in the present application illustrates a right-eye lens in a planar view, with the nose side direction being the +X direction and the ear side direction being the -X direction when the right-eye lens is worn. The -X direction to +X direction is also called a "horizontal direction".

When the functional region is provided only on an outermost surface on the eyeball side, the state when viewed from the -Z direction to the +Z direction may be regarded as a planar view. Hereinafter, when discussing "position" such as the eye point and geometric center of the spectacle lens, this refers to a position in a planar view unless otherwise specified.

In this specification, "-" indicates a value equal to or greater than a given value and equal to or less than a given value. Hereinafter, reference numbers will be added, but only the first item will be added, and the reference numbers will be omitted thereafter.

<Spectacle lens 1 that is a basis of design>

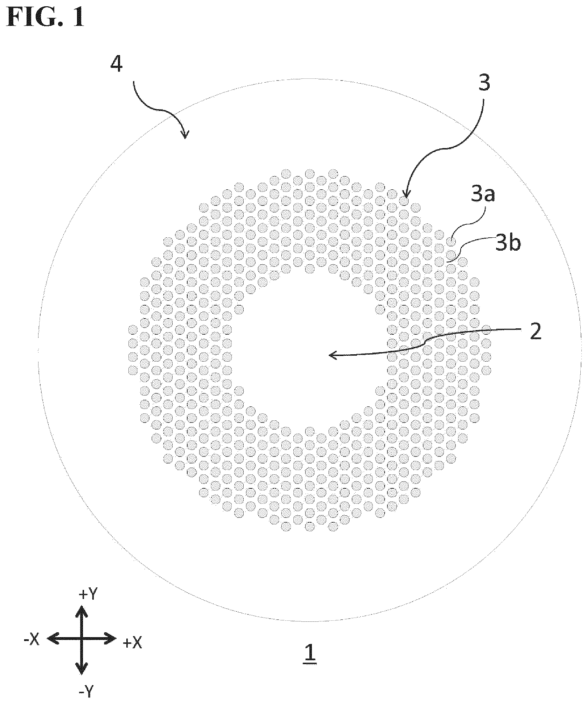

FIG. 1 is a schematic planar view of a spectacle lens 1 according to one embodiment of the present invention.

FIG. 1 shows the spectacle lens 1 before edging. FIG. 1 shows an example in which a diameter of the spectacle lens 1 is 60 mm, a diameter of the functional region 3 is 40 mm, and a diameter of the central clear region 2 is approximately 15.4 mm. The diameter of the central clear region 2 and the diameter of the functional region 3 given here are values when centered on the lens center.

The spectacle lens 1 according to a design method according to one aspect of the present invention has an effect of inhibiting the progression of myopia or reducing hyperopia, as described in Patent documents 1 to 3.

The spectacle lens 1 according to one aspect of the present invention includes a central clear region 2 and a functional region 3.

The central clear region 2 is a portion having a smooth surface shape capable of realizing a wearer's prescribed refractive power from the viewpoint of geometrical optics, and is, for example, a portion that is transparent in a visible light wavelength range. An outer clear region 4 described later also has a similar function.

The central clear region 2 corresponds to the first refractive region of Patent document 1, and may be a base region 3b provided at or near the lens center of the spectacle lens 1 shown in FIG. 1 of Patent document 3. Further, the central clear region 2 is a region that includes the lens center and/or eye point, and is a region that causes the light beam entering from the object-side surface to exit from the eyeball-side surface, enter the wearer's pupil, and converge on the retina.

The central clear region 2 according to one embodiment of the present invention allows a prescribed power (spherical power, cylindrical power, cylindrical axis, etc.) to be achieved. This spherical power may be a power to be corrected when looking straight ahead (the distance to the object is from infinity to about 1 m) (for example, distance power; hereinafter, distance power will be exemplified), or may be a power to be corrected when viewing at intermediate distances (1 m to 40 cm) or near distances (40 cm to 10 cm).

Further, the central clear region 2 does not include any configurations (e.g., defocus region, convex and/or concave region, embedded structures, etc.) intended to provide an effect of inhibiting the progression of myopia or reducing hyperopia.

The central clear region 2 (and the base region 3b in the functional region 3, and further the outer clear region 4) in one embodiment of the present invention functions as a so-called single focal length lens.

Incidentally, the prescription data of wearer's information is written on a lens envelope of the spectacle lens 1. That is, when there is the lens envelope, it is possible to identify it as the spectacle lens 1 based on the prescription data of the wearer's information. Usually, the spectacle lens 1 is provided in a set with the lens envelope. Therefore, a technical concept of the present invention is reflected in the spectacle lens 1 attached with the lens envelope, and the same is true for the set of the lens envelope and the spectacle lens 1.

The "eye point (EP)" is, for example, a position through which the line of sight passes when the spectacle lens 1 is worn and a wearer looks straight ahead, and this example will be given below. The eye point may be a position through which the line of sight passes when the wearer visually recognizes an object close to the wearer (in other words, when viewing near), that is, may be a near vision eye point. One aspect of the present invention shows a case where a geometric center of the spectacle lens 1 before being fitted into a frame coincides with the eye point, a prism reference point, and the lens center. Hereinafter, as an example of the spectacle lens 1 according to one embodiment of the present invention, the spectacle lens 1 before being fitted into a frame will be illustrated, but the present invention is not limited to this embodiment.

The position of the eye point can be specified by referring to a remark chart or a centration chart issued by a lens manufacturer.

The functional region 3 is a region in which a light beam entering from the object-side surface is emitted from the eyeball-side surface, while not allowing at least a part of the light beam entering the wearer's pupil to be converged on the retina. The functional region 3 is an annular region adjacent to and surrounding the central clear region 2 in a planar view.

An entire annular functional region 3 does not necessarily have a surface shape of the spectacle lens 1 (for example, an opacified surface such as frosted glass) or an internal embedded structure different from that of the central clear region 2. For example, when the first refractive region (the base region 3b having the same function as the central clear region 2) that realizes the prescribed power is provided around the convex region while providing the convex region in an island shape like the second refractive region of Patent document 1, in this case, the annular region including the base region 3b and the convex region may be regarded as the functional region 3. The base region 3b is a portion that can realize the prescribed refractive power of the wearer.

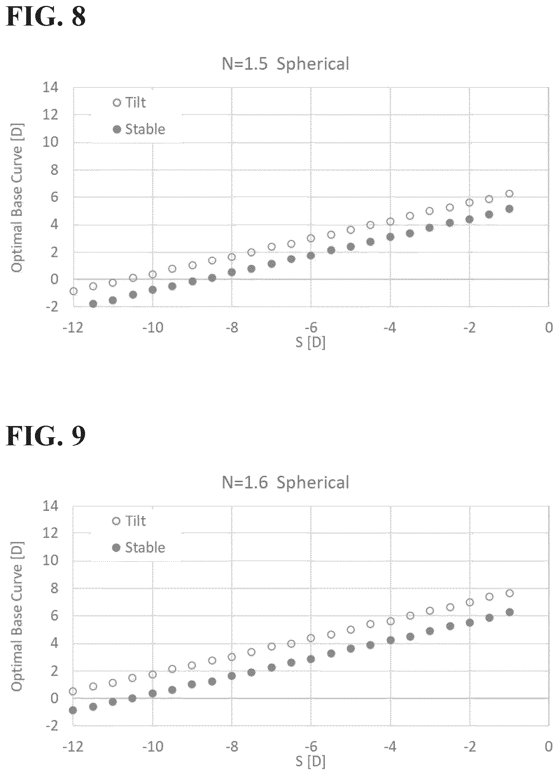

Also, regarding the functional region 3, as shown in FIG. 8 of Patent document 3, in the spectacle lens 1 in which a convex region is formed in a circular ring shape and a plurality of such rings are arranged in a radial direction and a region with no convex region formed therein is set as a base region 3b, the region between the smallest diameter rings and the largest diameter rings may be set as the functional region 3.

Also, regarding the functional region 3, when a member having a different refractive index is embedded inside the spectacle lens 1, an annular region between a portion closest to the eye point and a portion farthest from the eye point EP may be set as the functional region 3.

The region where the light beam that enters the wearer's pupil is not converged on the retina is also referred to as an on-retinal non-convergence region 3a. The region of the functional region 3 other than the base region 3b is the on-retinal non-convergence region 3a. The on-retinal non-convergence region 3a is formed as a region having a power different from the prescribed power so as to focus light at a position other than the retina.

One aspect of the present invention may include an annular outer clear region 4 that is adjacent to the functional region 3 on the outer edge side of the spectacle lens 1 and surrounds the functional region 3. The outer clear region 4 allows a light beam entering from the object-side surface to exit from the eyeball-side surface, enter the wearer's pupil, and converge on the retina. That is, the functional region 3 is an annular region existing between the outer clear region 4 and the central clear region 2.

The above is the configuration of the spectacle lens 1 that is the basis of the design.

The finding leading to the present invention will be described below, and then the method for designing the spectacle lens 1 will be described.

After that, the spectacle lens 1 according to one embodiment of the present invention will be described, in which the design method is reflected as a physical object in the form of a configuration.

<Finding leading to the present invention>

As described in the section on the problem to be solved by the present invention, in the case of a general spectacle lens 1, when a positional relationship between the wearer's eye and the eyeglasses is deviated, visibility becomes good somewhere on the spectacle lens 1 by moving the line of sight. On the other hand, the present invention relates to the spectacle lens 1 that has an effect of inhibiting the progression of refractive errors (an effect of inhibiting the progression of myopia or an effect of reducing hyperopia) and has the central clear region 2 and the functional region 3.

The present inventors found a novel method of applying the concept of an eyebox, which is used in optical systems with small eyepiece diameters or significantly narrowed light beams, such as binoculars, scopes, and head-mounted displays, to the spectacle lens 1.

The eyebox is a well-known concept in binoculars, scopes, head-mounted displays, etc. A brief explanation is given below.

Generally speaking, when viewing an object, it is preferable for the reflected light from the object coming from each direction to enter the pupil at the same time. For example, when some of the reflected light does not enter the pupil, vignetting or blurring occurs in part of the field of view.

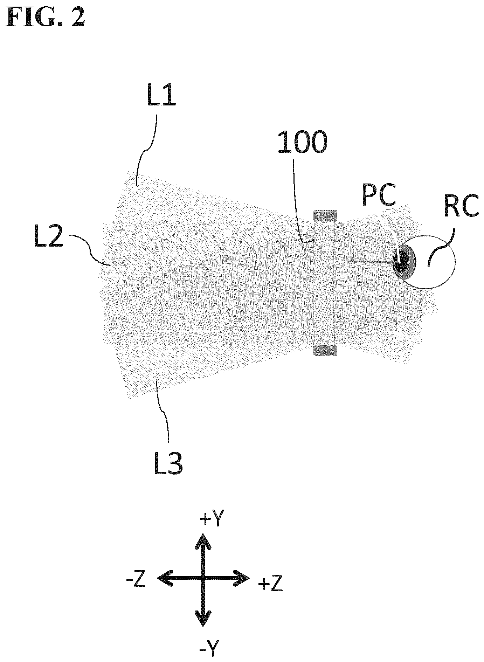

FIG. 2 is a schematic view showing how light beams L1, L2, and L3 from the vertical upper side (+Y direction), the vertical center (optical axis), and the vertical lower side (-Y direction) pass through a conventional general spectacle lens 100 that does not have the effect of suppressing the progression of refractive error.

As shown in FIG. 2, when the above-described conventional general spectacle lens 100 is worn, when the pupil is positioned in a range where the light beams coming from the three directions overlap, there will be no vignetting or blurring in part of the field of view. The overlapping range occupies most of an innermost part of the eyeball-side surface. Therefore, as described in the section of Problem to be solved by the invention, in the case of the above-described conventional general spectacle lens 100, when the positional relationship between the wearer's eyes and the eyeglasses is deviated, visibility becomes good somewhere on the spectacle lens 1 by moving the line of sight. That is, in the case of the conventional general spectacle lens 100 described above, there is no reason to bring up the concept of the eye box.

On the other hand, the situation is different for the spectacle lens 1 that has the effect of inhibiting the progression of refractive errors (the effect of inhibiting the progression of myopia or the effect of reducing hyperopia) and has the central clear region 2 and the functional region 3.

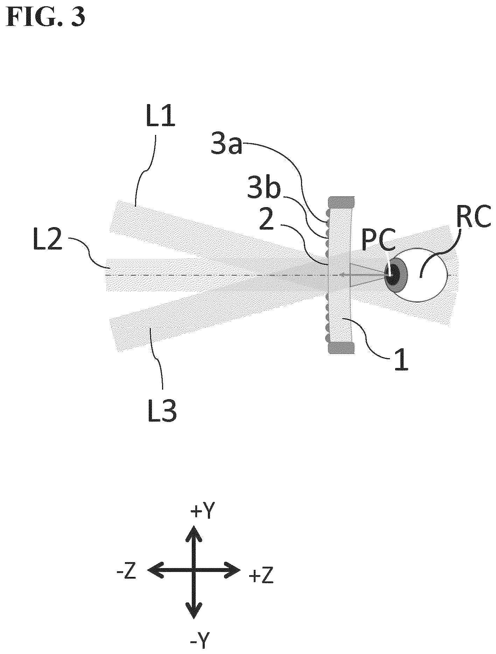

FIG. 3 is a schematic view showing how light beams L1, L2, and L3 from the vertical upper side (+Y direction), the vertical center (optical axis), and the vertical lower side (-Y direction) pass through the central clear region 2 of the spectacle lens 1 that has the effect of inhibiting the progression of myopia.

The spectacle lens 1 used in the present invention is the spectacle lens 1 having the central clear region 2 and the functional region 3, which have the effect of inhibiting the progression of refractive errors (the effect of inhibiting the progression of myopia or the effect of reducing hyperopia). The functional region 3 is provided so as to surround the central clear region 2. As a result, the central clear region 2 is naturally smaller than an entire spectacle lens 1, and the eye box is naturally smaller than the case when the above-described conventional general spectacle lens 100 is worn.

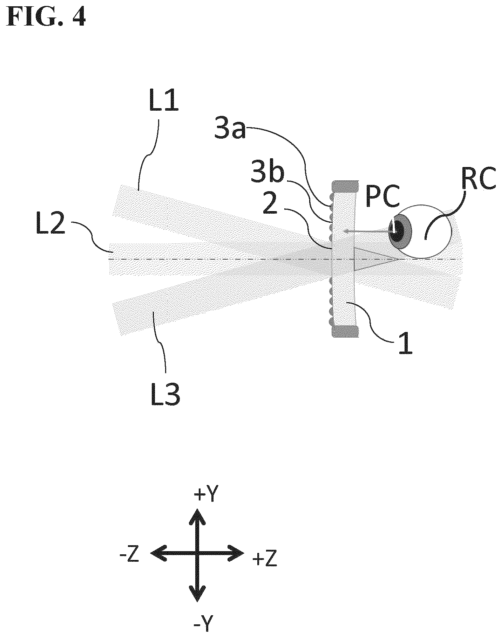

FIG. 4 is a schematic view (decenter model) showing how light beams L1, L2, and L3 from the vertical upper side (+Y direction), the vertical center (optical axis), and the vertical lower side (-Y direction) pass through the conventional general spectacle lens 100 that does not have the effect of suppressing the progression of refractive errors.

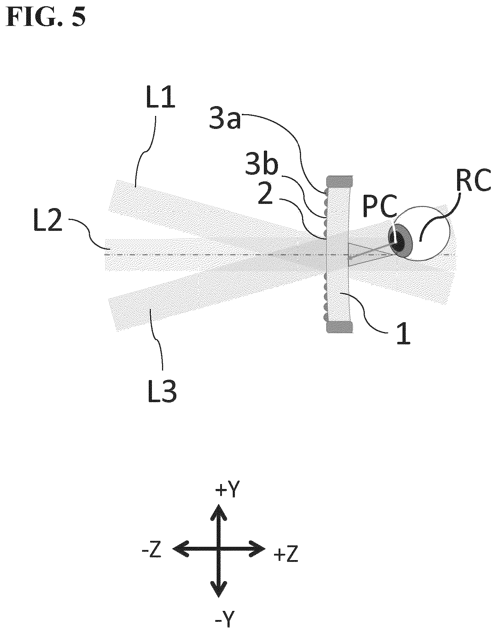

FIG. 5 is a schematic view (tilt model) showing how light beams L1, L2, and L3 from the vertical upper side (+Y direction), the vertical center (optical axis), and the vertical lower side (-Y direction) pass through the conventional general spectacle lens 100 that does not have the effect of suppressing the progression of refractive errors.

The decenter model and the tilt model will be described in detail later.

In the case of FIG. 4, the pupil is out of the eye box, and light coming from the vertical center (optical axis) and from the vertical lower side (-Y direction) does not enter the eye. In this situation, the wearer's eye will begin to move in an attempt to put a pupil into the eye box, even if it was just a part of the pupil. This results in a state shown in FIG. 5. The decenter model and tilt model described below are selected as representative models in one embodiment of the present invention, taking into consideration the above eye movement.

<Method for designing the spectacle lens 1>

There is provided a method for designing the spectacle lens 1 according to one aspect of the present invention, the method including:

a modeling step of dividing a pattern into multiple models with a deviation from a normally worn state of the spectacle lens 1 as decentering,
to prepare the following models as the multiple models:

a reference model that represents a pupil center PE and a rotation center RE when observing an object through a central clear region 2;
a decenter model in which the rotation center RE and the pupil center PE of the reference model are translated by the same distance vertically; and
a tilt model in which only the rotation center RE moves vertically from a reference state by the same amount as a translation amount in the decenter model, and the pupil center PE does not move from a straight line passing through the rotation center RE and the pupil center PE of the reference model;
a sensitivity calculation step of calculating a decenter sensitivity and a tilt sensitivity,
wherein a common object surface is set for each model,
a central light beam is set, which is a light beam emitted from a point on the object surface and passing through the pupil center PE and the rotation center RE of each of the models, and a difference between an astigmatism of the central light beam in the decenter model and an astigmatism of the central light beam in the reference model is defined as the decenter sensitivity, and a difference between an astigmatism of the central light beam in the tilt model and an astigmatism of the central light beam in the reference model is defined as the tilt sensitivity; and
a design step of using a base curve value in the vicinity of a balance solution as a base curve of the spectacle lens, wherein when a base curve value c [unit: diopter (D)] which is a curvature of a surface in a region H where the on-retinal non-convergence region 3a is not provided on an object-side surface is taken as x-axis, and the decenter sensitivity and the tilt sensitivity [unit: diopter (D)] are taken as y-axis, and an intersection of a plot of the decenter sensitivity and a plot of the tilt sensitivity is taken as the balance solution.

Hereinafter, the base curve value c will be simply referred to as a "base curve. "

The purpose of the modeling step is to divide a manner of decentering that causes the vertical lens deviation described in the section on the problem to be solved by the present invention into multiple patterns. Then, in the design step, the base curve value c is grasped, which is the value at which the decenter sensitivity and the tilt sensitivity, which are the generation amounts of astigmatism in each patterned model, are not changed significantly even when the model is different. The generation amount of astigmatism does not change significantly even when the model is different, in other words, there is (almost) no difference between the decenter sensitivity and the tilt sensitivity, which means that the generation amount of astigmatism is robust against the vertical deviation amount of the lens, regardless of the manner in which vertical lens deviation occurs. The design method for designing the spectacle lens 1 according to one embodiment of the present invention is based on this technical concept.

In this specification, "decentering" refers to a state in which the spectacle lens 1 deviates from a normally worn state of the spectacle lens 1. A specific example of the normally worn state of the spectacle lens 1 is a state in which the optical axis of the spectacle lens 1 coincides with the line of sight of a wearer, and the following description will be given using this specific example.

In this specification, the "optical axis of the spectacle lens 1" refers to a direction that passes through a lens center and is perpendicular to a tangent plane of the lens at the lens center. The optical axis direction corresponds to the +Z to -Z direction described above. There are various patterns of decentering, but they can be broadly classified into the following two types of deviation.

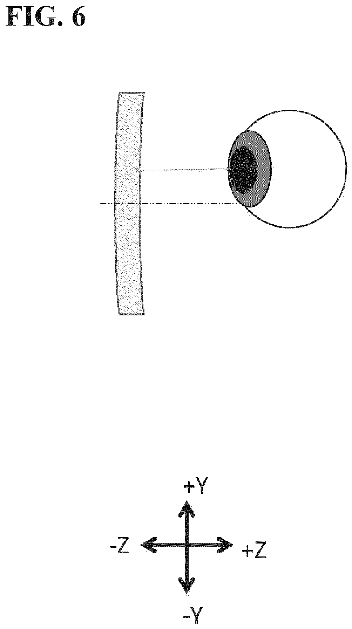

FIG. 6 is an explanatory view of a decenter model.

A decenter model is given as one model in which the rotation center RE and the pupil center PE of the reference model are translated by the same distance in the vertical direction (+Y to -Y directions). This is also referred to as the deviation in the vertical direction from the optical axis (deviation in the +Y to -Y directions) when the spectacle lens 1 is moved in parallel to the optical axis direction.

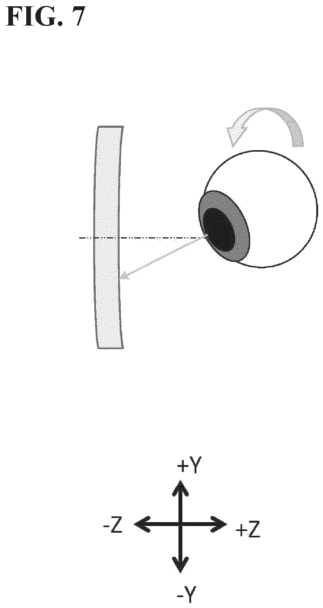

FIG. 7 is an explanatory view of the tilt model.

The tilt model is given as the other model in which only the rotation center RE moves in the vertical direction from the reference state by the same amount of translation as in the decenter model, and the pupil center PE does not move from the straight line passing through the rotation center RE and the pupil center PE of the reference model. This is also referred to as a deviation of a line of sight that is inclined vertically (-Y direction) relative to the optical axis of the spectacle lens 1 (a straight line with a positive inclination in the Y-Z plane) while the pupil center PE intersects with the optical axis of the spectacle lens 1 (that is, there is no vertical deviation between the pupil center PE and the optical axis of the spectacle lens 1).

Of course, a combination of the decenter model and the tilt model can be considered, but according to one embodiment of the present invention, two extremes are assumed: a state in which the decenter model occupies 100% and a state in which the tilt model occupies 100%. When the generation amount of astigmatism at these two extremes becomes robust, then it goes without saying that robustness can be ensured even when both models are combined.

One of the features of one aspect of the present invention is as follows.

In addition to each model of deviation, a reference model is also constructed. Then, it is determined to what extent the difference between the astigmatism of the central light beam in the reference model and the astigmatism of the central light beam in the decenter model (decenter sensitivity) and the difference between the astigmatism of the central light beam in the reference model and the astigmatism of the central light beam in the decenter model (tilt sensitivity) are equal at which base curve.

As a specific example of the reference model according to one aspect of the present invention, the following example is given: the pupil center PE and the rotation center RE of the wearer are located on the optical axis of the spectacle lens 1 that passes through the central clear region 2. In this specification, this case is taken as an example for ease of explanation, however, the present invention is not limited to this specific example.

This is because the object of the present invention is to make the decenter sensitivity and the tilt sensitivity robust against the vertical deviation of the spectacle lens 1, and even when the reference model is not one of the specific above examples, the robustness referred to in this specification is achieved when the difference in astigmatism of the central light beam of each model relative to the astigmatism of the reference model is (almost) equal for each model. On the other hand, the reference model is not completely arbitrary and this embodiment assumes the case in which the object is viewed through the central clear region 2. That is, as described above in the problem to be solved by the present invention, it is assumed that the line of sight passes through the central clear region.

The decenter sensitivity and the tilt sensitivity, which are the generation amounts of astigmatism in each patterned model, are calculated by the following procedure.

First, a common object surface is set for each model. The object surface is a surface that represents an object that is visually recognized by a wearer of the spectacle lens 1, and is a surface that is conventionally used in the design of the spectacle lens 1. The object surface may be a spherical surface centered on the rotation center RE of the reference model.

Then, the central light beam is set which is emitted from a point on the object surface and passes through the pupil center PE and the rotation center RE of each model. "Astigmatism of the central light beam in each model" refers to astigmatism occurring due to decentration in each model, and can also be said to be the generation amount of astigmatism in the central visual field centered on the optical axis of the eyeball.

At this time, the difference between the astigmatism of the central light beam in the decenter model and the astigmatism of the central light beam in the reference model is defined as a decenter sensitivity.

Similarly, the difference between the astigmatism of the central light beam in the tilt model and the astigmatism of the central light beam in the reference model is defined as a tilt sensitivity.

After the modeling step, a sensitivity calculation step is performed to calculate the decenter sensitivity and the tilt sensitivity.

The decenter sensitivity and the tilt sensitivity are collectively referred to as the "generation amount of astigmatism."

The rotation center and a pupil position may be set based on user's biometric information, or may be set using a standard model such as the Gullstrand eye model, or may be determined using a simple paraxial model as shown in the example. The pupil position may be a position of an entrance pupil.

A specific example of the setting conditions for the decenter model and the tilt model will be described in the example given later. The present invention is not limited to the specific setting conditions of both models.

In the above-described spectacle lens 1 as the invention relating to design and manufacturing methods, which provides the prerequisite effect of inhibiting the progression of myopia or reducing hyperopia, modeling a deviation mode into the decenter model and the tilt model and designing the spectacle lens 1 using the robust base curve, is itself a technical idea that has not been seen in the conventional spectacle lens 1 which provides an effect of inhibiting the progression of myopia or reducing hyperopia, and this technique itself is not limited to the specific setting conditions of both models.

As an invention relating to the spectacle lens 1, which will be described in detail later, the vertical dioptric power and refractive index of the spectacle lens 1 can be defined as variables within a range. The refractive index in this specification refers to the refractive index at e-line (wavelength 546 nm).

In this specification, the term "vertical refractive power" refers to the refractive power (unit: D) that refracts a light beam when the light beam passes through the region H on the object-side surface of the spectacle lens 1 and the region H' on the eyeball-side surface of the spectacle lens 1 (portions that meet a prescribed refractive power, both are shown below), and this refers to the refractive power in the vertical direction. The refractive power in the vertical direction of the spectacle lens 1 is a value that reflects the spherical power and cylindrical power, which are prescription values.

Depending on the setting conditions of the relative positional relationship between the pupil and the spectacle lens 1, there is a change in the position of the plot of the decenter sensitivity and the plot of the tilt sensitivity as well as the position of their intersection. On the other hand, the generation amount of astigmatism, which is shown on the vertical axis, corresponds to the degree of decentering. More specifically, the generation amount in the decenter model corresponds to the square of the amount of decentering, and the generation amount in the tilt model corresponds to the square of a decentering angle. That is the relationship between the decenter sensitivity and the tilt sensitivity does not change significantly depending on the difference in the degree of decentering. Therefore, the effect of the present invention can be achieved by adopting the setting conditions that are typical of a human wearer (especially child or infant) and applying a numerical range of the base curve value c in the spectacle lens 1 according to one embodiment of the present invention described below. Typical settings for a child or infant are as follows:

Thickness of the center of the spectacle lens 1: 0.5 to 5.0 mm
Amount of decentering: -10 to 10 mm (diagonally downward toward the optical axis) Decentering angle: -40 to 40 degrees (angle between the optical axis and the diagonally downward toward the optical axis)
Vertical refractive power: 0 to -10D (from the viewpoint of robustness, -6.00D to - 10.00D is particularly suitable.)
Refractive index of the spectacle lens 1: 1.45 to 1.8

When the vertical refractive power is a plus power, the light beam that passes through the eyeball-side surface converges, the light beam tapers, and the eyebox becomes even smaller. As a result, it becomes increasingly important to reduce the tilt sensitivity (generation amount of astigmatism) in the tilt model.

When a common myopia prescription power (spherical power + add power) or aspherical addition amount is adopted, the two plots intersect each other.

The plot of the decenter sensitivity is a quadratic function, and the location of the extreme values of the plot and the degree of unevenness of the plot depend on a prescription power. The spectacle lens 1 that has the effect of inhibiting the progression of myopia is usually a minus lens. In the case of the minus lens, the plot of the decenter sensitivity has an extreme value on the negative side of x=0 and is upwardly convex. As a result, the plot where the base curve is near zero (x=0) slopes downward in the positive direction of the x-axis.

On the other hand, the plot of the tilt sensitivity behaves similarly to the Martin equation, so that the plot of the tilt sensitivity always slopes upward in the positive x-axis direction.

As a result, the plots of both sensitivities are not parallel to each other but have an intersecting point somewhere.

In any case, in the method for designing the spectacle lens 1 according to one aspect of the present invention, it is preferable to perform the design step in a state where the plots of both sensitivities have an intersecting point. When the plots of both sensitivities do not intersect at a stage prior to the sensitivity calculation step, an aspheric correction step (described later) may be performed so that the plots of both sensitivities intersect each other before the design step.

In the design step, it is preferable to directly prepare the plot of the decenter sensitivity and the plot of the tilt sensitivity. On the other hand, it is also possible to calculate the balance solution by data processing in a computer terminal without directly preparing both plots. Further, in the relationship in which the base curve value c is the x-axis and the generation amount of astigmatism (unit: diopter (D)) is the y-axis, the x-axis and y-axis may of course be reversed. As a result, in the spectacle lens 1 according to one aspect of the present invention, which has the above-described configuration and exhibits the effect of inhibiting the progression of myopia or the effect of reducing hyperopia, use of the base curve value in the vicinity of the intersection of both plots as the base curve of the spectacle lens 1 means that the technical idea of the present invention is used. The plot of the decenter sensitivity and the plot of the tilt sensitivity are collectively referred to as "both plots." The settings of the x-axis and y-axis on which both plots are based are collectively referred to as a "model plot."

**In** this specification, the "region H where the on-retinal non-convergence region 3a is not provided on the object-side surface" is a region that satisfies the prescription of the wearer. Since the line of sight frequently passes through the region **H,** it may be a region including at least the central clear region 2 and the base region 3b within the functional region 3. Alternatively, the region H may include the central clear region 2, the outer clear region 4 and the base region 3b within the functional region 3. The definition of this region H also applies to the "region H' where the on-retinal non-convergence region 3a is not provided on the eyeball-side surface" described later.

In this specification, the "curvature of the surface in the region H" refers to an average surface curvature of the region H, for example. When the region H has an aspheric shape, the concept of approximate curvature described in Japanese Patent No. 3,852,116 may be adopted and the approximate curvature may be regarded as the curvature of the surface in the region H. In any case, in this specification, the value of the curvature of the above surface is the base curve value c [unit: diopter (D)].

When the base curve is taken on the x-axis and the generation amount of astigmatism is taken on the y-axis, the base curve value c near the intersection of the plot of the decenter sensitivity and the plot of the tilt sensitivity causes almost no difference in the generation amount of astigmatism whether decentering occurs in the decenter model or in the tilt model. That is, when the spectacle lens 1 having the above-described configuration and having an effect of inhibiting the progression of myopia or reducing hyperopia is designed using the base curve value c in the vicinity of the intersection point, the generation amount of astigmatism becomes robust against the vertical deviation amount of the lens. In addition, when making the lens robust, it is possible to design the spectacle lens 1 that satisfies different prescription values and has the effect of inhibiting the progression of myopia or reducing hyperopia from the spectacle lens 1 that has a common base curve. Hereinafter, the intersection point between the two plots or the base curve value at the intersection point will also be referred to as a balance solution.

<Preferable example of the method for designing the spectacle lens 1>

For example, the vicinity of the intersection point between the plot of the decenter sensitivity and the plot of the tilt sensitivity refers to a range in which an upper limit is (the base curve value + 0.25D when the y-axis value in the tilt sensitivity plot is zero) and a lower limit is a value at which the base curve value of the balance solution is an intermediate value. The upper limit is adopted as a guideline for the case where the generation amount of astigmatism (here, the tilt sensitivity) is zero.

It is preferable that the base curve of the spectacle lens 1 used in the above design step is within this range. To give an example of this range in numerical terms, when the base curve value is 5.00D (upper limit) at the y-axis value of zero in the tilt sensitivity plot and the balance solution is 4.00D, then the lower limit is 3.00D.

That is, the above range of the base curve used in the design step is a range that includes the balance solution, and the upper limit is set by reflecting the characteristics of the plot of the decenter sensitivity (negative slope) and the plot of the tilt sensitivity (positive slope). The above range is effective even when the generation amount of astigmatism is zero in the balance solution which is the intersection point, by shifting the plot of the decenter sensitivity and the plot of the tilt sensitivity by aspheric correction as in a specific example given later. Specifically, the base curve within a range of (the base curve of the balance solution $\pm 0.25D$) may be used in the design step.

The design step may include an aspheric correction step of performing aspheric correction to at least one of the region H on the object-side surface of the spectacle lens 1 and the region H' on the eyeball-side surface thereof where the on-retinal non-convergence region 3a is not provided, and in the aspheric surface correction step, the intersection of the plots may be moved in the y-axis direction to bring the value of the generation amount of astigmatism in the balance solution closer to zero. The idea of the aspheric correction step is as follows.

Among the plots given in one aspect of the present invention, the plot of the tilt sensitivity corresponds to a fourth-order function amount for a spherical surface. An astigmatism amount can be controlled by the fourth-order function amount. For example, an aspheric surface can be added to a spherical surface by adding the fourth-order function amount corresponding to the distance from the origin in the XY plane, $h = \sqrt{(X^2 + Y^2)}$, as a sag amount. Then, by adding the aspheric surface, the plot of the tilt sensitivity can be moved in the y-axis direction. This "moving in the y-axis direction" means moving at least in the y-axis direction, and does not exclude moving in the x-axis direction as well. The same applies to "moving in the x-axis direction" described below, which means moving at least in the x-axis direction, and does not exclude moving in the y-axis direction as well.

For the addition of the aspheric surface, not limited to the z coordinate, the technique described in Japanese Patent No. 3,852,116 (addition of coordinates, addition of curvature) may be used. Further, as a specific operation content in the aspheric correction step, a known technique of aspheric correction for an optical lens mounted on cameras, etc., may be adopted. A known example of the aspheric correction technique is the aspheric correction technique for VR goggles described in WO2017/200576.

The plot of the decenter sensitivity corresponds to a second-order function amount for a sphere. A spherical power can be controlled by the quadratic function amount. Since the astigmatism amount is controlled by the fourth-order function amount, the plot of the decenter sensitivity corresponding to the second-order function amount also moves in the y-axis direction.

That is, the aspheric correction step allows the position of the balance solution, which is the intersection of the two plots, on the model plot to be changed to a desired position.

For example, when the balance solution is placed at the position where the generation amount of astigmatism is zero, which is the y-axis, then, by using the base curve in the vicinity of the balance solution in the design step, not only is the robustness against the vertical deviation of the spectacle lens 1 for each model obtained, but the generation amount of astigmatism is also zero or close to zero, providing a clear field of vision. The specific example in this paragraph corresponds to the above-described (base curve of the balance solution $\pm 0.25D$). $\pm 0.25D$ is a definition that takes into account manufacturing errors.

Alternatively, the aspheric correction step can be utilized as follows.

Prior to the design step, a base curve determination step is performed in which the value of the base curve of the spectacle lens 1 is determined in advance. Then, in the aspheric correction step, the intersection point between the plots is moved in the x-axis direction, and the base curve value in the balance solution is approached to the base curve value determined in the base curve determination step.

In many cases, only one value of the base curve of the spectacle lens 1 can be handled, due to the facilities owned by the manufacturer of the spectacle lens 1. Even when more than one value can be handled, it is often only possible within a limited range of the base curve. On the other hand, by utilizing one aspect of the present invention, the position of the balance solution can be moved closer to the base curve that the manufacturer can handle.

Of course, it is acceptable and more preferable to combine moving the intersection point between the plots in the x-axis direction to bring the base curve value in the balance solution closer to the base curve value determined in the base curve determination step and placing the balance solution at a position on the y-axis where the generation amount of astigmatism is zero.

The aspheric surface may be added to the region H of the object-side surface, the region H' of the eyeball-side surface, or both regions. However, since the shape of the object-side surface determines the value of the base curve, the shape of the object-side surface may be left as is, and the aspheric correction step may be performed only to region H' of the eyeball-side surface. With this configuration, it becomes sufficient to perform inner surface aspheric processing to a semi-finished lens having a common base curve during the manufacturing stage. This leads to providing the spectacle lens 1 at a low cost.

<Method for manufacturing the spectacle lens 1>

The technical concept of the present invention is also reflected in the method for manufacturing the spectacle lens 1, which includes a manufacturing step of manufacturing the spectacle lens 1 based on the design step included in the method for designing the spectacle lens 1 according to one aspect of the present invention. The manufacturing step may be performed using a known technique for the spectacle lens 1 that has the effect of inhibiting the progression of myopia or reducing hyperopia.

<Spectacle lens 1>

The spectacle lens 1 according to one aspect of the present invention has the configuration described above in the <Spectacle lens 1 that is a basis of design>, and further has the following configuration.

In a planar view, the outer edge of the functional region 3 is larger than a circle having a diameter of 35 mm and centered on the eyepoint. This definition means that the on-retinal non-convergence region 3a exists outside the circle having a diameter of 35 mm.

In the spectacle lens 1 according to one aspect of the present invention, the base curve value c (unit: diopter (D)), which is the curvature of the surface in the region H where the on-retinal non-convergence region 3a is not provided on the object-side surface, satisfies the following formula.

$$2Cs-Ct-0.25 \leq c \leq Ct+0.25$$

$$Cs=11.4(N-1)+0.65S$$

$$Ct=13.8(N-1)+0.65S$$

N: Refractive index of the spectacle lens 1 (for example, the lens substrate)
S: Vertical refractive power in the region H

Cs is the base curve value that provides the balance solution (the intersection of both plots) when a single-focal lens having spherical shapes on both sides is assumed. Ct is the base curve value at which the generation amount of astigmatism in the tilt model becomes zero when the single-focal lens having spherical shapes on both sides is assumed, and, 2Cs-Ct on the left side of the above inequality expression can be obtained by Cs-(Ct-Cs). The left side of the above inequality expression corresponds to a value obtained by subtracting 0.25D from the value obtained when the model plot is shifted in the negative direction on the x-axis by the distance between the balance solutions Cs and Ct.

The reason for subtracting 0.25D on the left side of the inequality expression and adding 0.25D on the right side of the inequality expression is that a manufacturing error is taken into consideration. Normally, the tolerance of the diopter is ±0.12D, but the peripheral portion of the spectacle lens 1 after actual manufacture may be distorted due to processing. The above ranges take this possibility into consideration. The 0.25 in the inequality expressions described below is the result of taking into consideration the manufacturing error.

The calculation basis for the S coefficient of 0.65 in Cs and Ct is as follows (Calculation basis 1).

As shown in the section of the Examples below, one example employs a single value for the vertical dioptric power.

For example, in Example 1, the dioptric power in the vertical direction is -8.00D. In the Example 1, one balance solution Cs and an upper limit Ct of the numerical range of the base curve are obtained.

In Example 2, the dioptric power in the vertical direction is -4.00 D. Also, in Example 1, one balance solution Cs and an upper limit Ct of the numerical range of the base curve are obtained.

This operation is performed for each example in which the vertical dioptric power is changed in increments of 0.25 D from -12.00 D to -1.00 D, and Cs and Ct are obtained for each example. The results are summarized in FIG. 8.

FIG. 8 is a plot (without aspheric correction) showing the relationship when the dioptric power of the spectacle lens 1 is 1.5, with the horizontal axis representing the vertical dioptric power S [D] and the vertical axis representing Cs and Ct (i.e., the base curve values). In FIGS. 8 to 10, black circles indicate Cs (stable in the figures), and white circles indicate Ct (tilt in the figures). Considering the specific example in which Cs is the balance solution and Ct is the base curve in its vicinity, the vertical axis is written as the Optimal Base Curve.

In FIG. 8, the slope of the approximation line obtained by formulating the regression analysis of the plot of Cs is 0.65, and the slope of the approximation line obtained by formulating the regression analysis of the plot of Ct is also 0.65. As a result, the coefficient of S in Cs and Ct is set to 0.65.

The basis for calculating 11.4, which is the coefficient of (N-1) in Cs, and 13.8, which is the coefficient of (N-1) in Ct, is as follows (Calculation basis 2).

As will be shown in the section of Examples below, in each Example, a single value of 1.5 is used as the refractive index N of the lens substrate.

Here, the values of Cs and Ct are obtained when the refractive index N of the lens substrate is 1.6. The results are summarized in FIG. 9.

FIG. 9 is a plot (without aspheric correction) showing the relationship when the refractive index of the spectacle lens 1 is 1.6, with the horizontal axis representing the vertical dioptric power S [D] and the vertical axis representing Cs and Ct (i.e., the base curve values).

Similarly, Cs and Ct are obtained when the refractive index N of the lens substrate is 1.7. Then, a plot is obtained (not shown) showing the relationship when the horizontal axis is (N-1) and the vertical axis is Cs, Ct (ie, the base curve values). The slope of the approximation line of the plot of Cs is 11.4, and the slope of the approximation line of the plot of Ct is 13.8.

The value c in the region H may satisfy the following formula. In the following formula, the lower limit is set to a value obtained by subtracting 0.25D, which takes into account manufacturing errors, from the base curve Cs of the balance solution.

$$Cs-0.25 \leq c \leq Ct+0.25$$

The value c in the region H may satisfy the following formula.

$$2Cs+2a \cdot As-2Ct-a \cdot At-0.25 \leq c \leq Ct+a \cdot At+0.25$$

$$As=(24.9+1.96S)(N-1)^2 \quad At=(9.7+0.65S)(N-1)^2$$

a is a unit fourth-order aspheric amount used for adjusting a scale, and the fourth-order aspheric coefficient is $10^{-6}$ as one unit. That is, the relationship with the sag amount Fa added to the spherical surface by the fourth-order aspheric surface is expressed as $Fa=a \cdot 10^{-6} \cdot h^4$.

According to one embodiment of the present invention, the addition of the z coordinate value (also called the sag amount) is expressed by the following formula.

$$z=-0.84 \cdot 10^{-6} \cdot (x^2+y^2)^2$$

The coefficient 0.84 in the above formula corresponds to the above a. Hereinafter, the coefficient will be expressed as the absolute value of the slope (e.g., -0.84) (e.g., 0.84).

The calculation basis for the coefficient of the vertical refractive power S and coefficient of $(N-1)^2$ in As and At is obtained by employing the same method as the calculation basis 1 and 2 described above.

In addition to these methods, here is one example: the additional sag amount is obtained by changing -0.84·10^-6·(x^2+y^2)^2 from -0.84 to -0.74, and then Cs and Ct are obtained by changing -0.84 to -0.94.

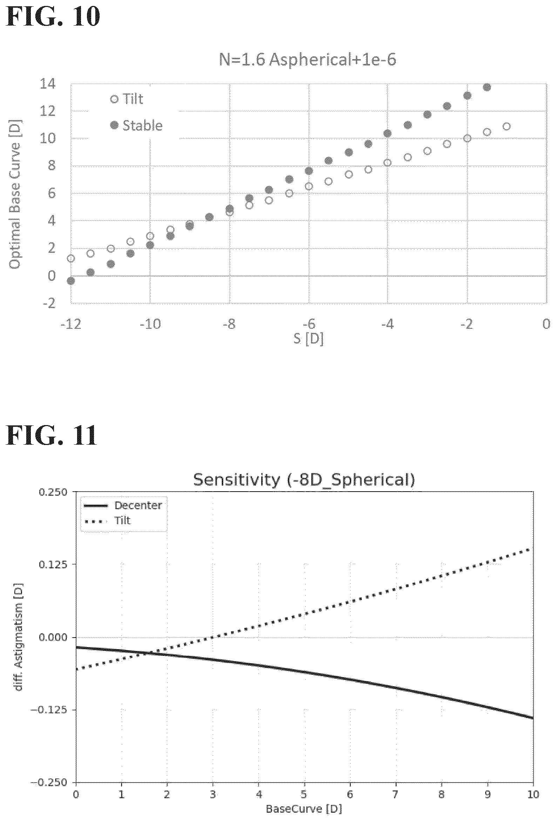

FIG. 10 is a plot (with aspheric correction, sag coefficient is 0.74) showing the relationship when the refractive index of the spectacle lens 1 is 1.6, with the horizontal axis representing the vertical refractive power S [D] and the vertical axis representing Cs and Ct (i.e., the base curve values).

The difference between FIG. 9 and FIG. 10 is the change due to the presence or absence of the aspheric correction. Further, from this change and the results of the plots described above, it was found that there was a quadratic relationship with respect to (N-1), and the slope of the approximate line with respect to (N-1)^2 was obtained. The coefficient of the vertical refractive power S is obtained by employing the same technique as in the calculation bases 1 and 2 above.

Adding the sag amount including the fourth-order function component to at least one of the region H and the region H' means that Taylor expansion excluding the spherical component reveals that the fourth-order function term has a significant value. The significant value means that it is not an error.

'As' means a displacement of the base curve (x-axis) of the balance solution due to the addition of a unit fourth-order aspheric amount. 'At' means a displacement of the base curve (x-axis) at the point (y=0) where the generation amount of astigmatism becomes zero in the plot of the tilt sensitivity, due to the addition of the unit fourth-order aspheric amount.

The value c in the region H may satisfy the following formula.

$$\mathrm{Cs} + a \cdot \mathrm{As} - 0.25 \leq c \leq \mathrm{Ct} + a \cdot \mathrm{At} + 0.25$$

The value c in the region H may satisfy the following formula. The following formula expresses the case where the base curve of the balance solution and the base curve at zero generation amount of astigmatism in the plot of the tilt sensitivity, are made equal or nearly equal due to addition of the aspheric surface.

$$|(\mathrm{Cs}+a \cdot \mathrm{As})-(\mathrm{Ct}+a \cdot \mathrm{At})| \leq 0.25$$

It is more preferable that all of the above formulas are satisfied. Other preferable examples are as follows.

In a planar view, the central clear region 2 is sized to encompass a circle having a diameter of 4 mm centered on an eye point, and is sized to be encompassed within a circle having a diameter of 16 mm centered on the eye point.

The shape of the functional region 3 is not limited, and may be annular in a planar view. The ring may be circular, rectangular, elliptical, etc., or a combination thereof, on the inside (i.e., the boundary between the central clear region 2 and the functional region 3) and/or on the outside (i.e., the boundary between the outer clear region 4 and the functional region 3).

There is no limitation in the size and shape of the functional region 3, so long as the outer edge of the functional region 3 is larger than a circle having a diameter of 35 mm and centered on the eyepoint. As a guideline for an upper limit of the size of the functional region 3, it is sufficient if it is large enough to encompass a circumference with a diameter of 50 mm centered on the lens center. The functional region 3 has an annular shape in a planar view, and the ring may be circular, rectangular, elliptical, etc., or a combination thereof on the inside (i.e., the boundary between the central clear region 2 and the functional region 3) and/or the outside (i.e. the boundary between the outer clear region 4 and the functional region 3).

In the functional region 3, the area of the on-retinal non-convergence region 3a in a planar view may be specified as 20% or more (or 30% or more, 40% or more, 50% or more, 60% or more) of an entire functional region 3. The upper limit may be, for example, 80% (or 70%).

The shape of the central side of the functional region 3 (i.e., the shape of the central clear region 2) is preferably defined as follows.

In a planar view, when the envelope curve EL2 surrounding the aggregate of all circles with a radius r2 [mm] (r2 is any one of the values in the range of 1.50 or more and 2.50 or less) that can circumscribe the on-retinal non-convergence region 3a in the functional region 3 on the side of the central clear region 2 without including other on-retinal non-convergence region 3a, is set as the boundary line between the functional region 3 and the central clear region 2, the central clear region 2 is preferably sized to encompass a circle having a diameter of any one of 5.00 to 13.00 mm centered on the eye point EP, and is also preferably sized to fit within a circle having a diameter (diameter 5.00 to 13.00 mm) different from the diameter within the above range (definition of the central side of functional region 3). The shape of the central clear region 2 may be the "aggregate of clear pupil circles" rather than the envelope curve surrounding the aggregate of clear pupil circles. That is, the central clear region 2 includes the eye point EP and may be constituted by the aggregate of clear pupil circles. As an example of a dimension, the diameters of the inscribed circle and the circumscribed circle of the central clear region 2 fall within the range of 5.00 to 13.00 mm. It is preferable that the central clear region 2 has a size of about that size.

The shape of the outer edge side of the functional region 3 (i.e., the functional region 3-side shape in the outer clear region 4 and the boundary between them) is preferably defined as follows.

In a planar view, the envelope curve EL1 surrounding the aggregate of all circles with a radius r1 [mm] (r1 is any one value in the range of 1.5 or more and 2.50 or less) that can circumscribe the on-retinal non-convergence region 3a within the functional region 3 on the outer clear region 4 side without including other on-retinal non-convergence region 3a, may be defined as a boundary line between the functional region 3 and the outer clear region 4 (definition of the outer edge side of the functional region 3). Because the value of 2·r1 (and 2·r2 described below) is assumed to be a pupil diameter, each of these circles is also referred to herein as a clear pupil circle.

The envelope curve will be exemplified below, in which the shape of the outer clear region 4 may be "an aggregate of clear pupil circles" rather than the envelope curve surrounding the aggregate of clear pupil circles. That is, the outer clear region 4 includes the eye point EP and may be constituted by the aggregate of clear pupil circles. In the spectacle lens 1, the region other than the central clear region 2 and the outer clear region 4 may be defined as the functional region 3.

The spectacle lens 1 according to one aspect of the present invention may be the spectacle lens 1 after being fitted into a frame, and a part of the functional region 3 of the spectacle lens 1 may be in contact with the outer edge of the spectacle lens 1, and another part of the functional region 3 may be in contact with the outer clear region 4. Further, it is not prohibited to provide the on-retinal non-convergence region 3a further on the outer edge side of the outer clear region 4.

However, in order to make it easier to obtain good visibility even in a peripheral vision, it is preferable that there is no configuration between the outer edge of the spectacle lens 1 and the functional region 3 that is intended to have an effect of inhibiting the progression of myopia or reducing hyperopia. That is, it is preferable that an entire area between the outer edge of the spectacle lens 1 and the functional region 3 be the outer clear region 4.

<Eyeglasses>

The technical concept of the present invention is also reflected in the eyeglasses in which vicinity of the periphery of the spectacle lens 1 is cut based on a predetermined frame shape so as to be fitted into a frame.

There are no limitations in the type or shape of the frame, and they may be fullrim, half-rim, under-rim, or rimless.

<One specific example of the spectacle lens 1 (details)>

A specific example of the spectacle lens 1 according to one aspect of the present invention will be described in detail below.

In the functional region 3, a defocus region can be given as an example of a configuration (on-retinal non-convergence region 3a) that has the effect of inhibiting the progression of myopia or reducing hyperopia.

The defocus region is a region where, from the viewpoint of geometrical optics, at least a part of the region does not allow the light to be focused at a light focusing position by the base region 3b. The defocus region is a portion that corresponds to minute convex parts in Patent document 1. The spectacle lens 1 according to one aspect of the present invention is a myopia progression inhibiting lens, similar to the spectacle lens described in Patent Document 1. Similar to the minute convex parts of Patent document 1, a plurality of defocus regions according to one aspect of the present invention may be formed on at least one of the object-side surface and the eyeball-side surface of the spectacle lens 1. This specification mainly shows a case where a plurality of defocus regions are provided only on the object-side surface of the spectacle lens 1. Hereinafter, unless otherwise specified, this specification shows a case where the defocus region has a curved shape that protrudes toward the outside of the lens.

It is preferable that at least half of the plurality of defocus regions (all defocus regions in the functional region) are arranged at the same period in a planar view. An example of a pattern having the same period is an equilateral triangular arrangement in a planar view (where the centers of the defocus regions are arranged at the vertices of an equilateral triangular net, a so-called honeycomb structure). 80% or more is preferable, 90% or more is more preferable, and 95% or more is even more preferable. Hereinafter, preferable examples of "the number of more than half (or more than 80%) of all defocus regions in the functional region" will be 80% or more, 90% or more, and 95% or more, in an order of preference, as described above, and repeated description will be omitted.

The defocus regions may be spherical, aspheric, toric, or a mixture of these (for example, the center portion of each defocus region may be spherical, and the outer peripheral region of the center portion is aspheric).

The boundary between the center and the peripheral portions may be provided at ½ to $2/3$ of the radius of the defocus region (or the convex region 3a) in a planar view. However, it is preferable that at least the center portion of the defocus region (or the convex region 3a) has a convex curved shape that protrudes toward the outside of the lens. Further, it is preferable that at least half of the plurality of defocus regions (all defocus regions in the functional region) are arranged at the same period in a planar view.

Each defocus region is configured, for example, as follows. The diameter of the defocus region in a planar view is preferably about 0.6 to 2.0 mm. The surface area of each may be about 0.50 to 3.14 mm$^2$. The radius of curvature of the convex region 3a is 50 to 250 mm, preferably about 86 mm, and is spherical.

Although there is no limitation in the specific value of the defocus power in each defocus region, for example, it is preferable that a minimum value of the defocus power provided by the defocus region on the spectacle lens 1 is within a range of 0.50 to 4.50 D, and a maximum value is within a range of 3.00 to 10.00 D. The difference between the maximum value and the minimum value is preferably within a range of 1.00 to 5.00D.

The "defocus power" refers to the difference between the refractive power of each defocus region and the refractive power of a portion other than each defocus region. In other words, the "defocus power" is a difference obtained by subtracting the refractive power of the base portion from an average value of the minimum refractive power and the maximum refractive power at a given point in the defocus region. This specification shows a case where the defocus region is the convex region 3a as an example.

In this specification, the term "refractive power" refers to an average refractive power which is an average value between the refractive power in the direction in which the refractive power is minimum and the refractive power in the direction in which the refractive power is maximum (the direction perpendicular to the above direction).

The arrangement of the defocus regions is not particularly limited, and can be determined from the viewpoints of, for example, visibility from outside the defocus regions, the addition of design features to the defocus regions, and the adjustment of refractive power by the defocus regions. The defocus region is an example of the on-retinal non-convergence region 3a, in which the light beam is converged in front of the retina (in the -Z direction) while not allowing the light beam to be converged on the retina.

In the functional region 3 arranged around the central clear region 2 of the spectacle lens 1, substantially circular defocus regions may be arranged in island shapes at equal intervals in circumferential and radial directions (i.e., spaced apart, not adjacent to each other). As an example, the defocus regions are arranged in a planar view in which the centers of the convex regions 3a are independently and discretely arranged so that they are the vertices of an equilateral triangle (the center of each defocus region is arranged at the vertex of the honeycomb structure: hexagonal arrangement). In this case, the distance between the defocus regions may be 1.0 to 2.0 mm, and the number of defocus regions (and thus the number of on-on-retinal non-convergence regions 3a) may be 10 to 200.

The lens substrate is made of a thermosetting resin material such as thiourethane, allyl, acrylic, or epithio. As the resin material constituting the lens substrate, other resin material that can provide a desired refractive index may be selected. Further, the lens substrate may be made of inorganic glass instead of the resin material.

The hard coat film is formed using, for example, a thermoplastic resin or a UV-curable resin. The hard coat film can be formed by a method of immersing the lens substrate in a hard coat solution, or by using spin coating, etc. By forming such a hard coat film, the durability of the spectacle lens 1 can be improved.

The anti-reflection film is formed by depositing an anti-reflection agent such as $ZrO_2$, $MgF_2$, or $Al_2O_3$ by vacuum deposition. By forming such an anti-reflection film, the visibility of an image passing through the spectacle lens 1 can be improved.

As described above, a plurality of defocus regions are formed on the object-side surface of the lens substrate. Accordingly, when this surface is coated with a hard coat film and an anti-reflection film, a plurality of defocus regions are also formed by the hard coat film and the anti-reflection film, following the defocus regions in the lens substrate.

The thickness of the coating formed by the lamination step may be, for example, in a range of 0.1 to 100 $\mu$m (preferably 0.5 to 5.0 $\mu$m, and more preferably 1.0 to 3.0 $\mu$m). However, the thickness of the coating is determined depending on the function required of the coating, and is not limited to the range exemplified above.

The technical scope of the present invention is not limited to the above-described embodiments, but includes those in which various modifications and improvements are made within the scope that can derive specific effects obtained by the constituent elements of the invention and their combinations.

For example, the definition described in the method for designing a spectacle lens according to one aspect of the present invention may be applied to the spectacle lens according to one aspect of the present invention. Conversely, the definition described in the spectacle lens according to one aspect of the present invention may be applied to the method for designing a spectacle lens according to one aspect of the present invention.

Example

The present invention will now be described in detail with reference to examples, but the present invention is not limited to the following examples.

<Example 1>

The following spectacle lens 1 in the following case was assumed: the spectacle lens 1 is composed of only a lens substrate, and no other substance is laminated on the lens substrate.

In this example, the range of the central clear region 2 was set as a circular region with a radius of 4.00 mm from the lens center, and the range of the functional region 3 was set within a circle with a radius of 20.00 mm from the lens center (excluding the central clear region 2). An outer clear region 4 is provided closer to the outer edge of the spectacle lens 1 than the functional region 3. An entire area between the outer edge of the spectacle lens 1 and the functional region 3 is set as the outer clear region 4 (this also applies to the following examples).

Then, the following configuration is adopted in this example.

- The vertical refractive power of the central clear region 2, the base region in the functional region 3, and the outer clear region 4 on the object-side surface: -8.00D
- The horizontal refractive power of the central clear region 2, the base region in the functional region 3, and the outer clear region 4 on the object-side surface: - 8.00D
- Planar diameter of the spectacle lens: 60.00 mm
- Refractive index of the spectacle lens: 1.6
- Center thickness of the spectacle lens: 1mm
- Configuration of the functional region 3: Convex regions 3a are discretely arranged as defocus regions.

In the functional region 3, the region other than the convex region 3a is a base region 3b.

- Shape of the convex region 3a: spherical
- Planar shape of the convex region 3a: perfect circle
- Refractive power of the convex region 3a: 3.50D
- Surface on which the convex region 3a is formed: the object-side surface
- Arrangement of the convex regions 3a in planar view: The convex regions 3a are individually and discretely arranged so that the center of each convex region 3a is the vertex of an equilateral triangle (the center of each convex region 3a is arranged at the vertex of a honeycomb structure)
- Pitch between each convex region 3a (distance between the centers of the convex regions 3a): 1.50 mm
- Pupil diameter of a wearer: assumed to be 4.00 mm
- Absolute value of the spherical aberration of a wearer's eye: assumed to be zero
- Distance between a wearer's corneal vertex and an eyeball side surface of the spectacle lens (CVD): 12 mm
- Distance between the wearer's rotation center and the eyeball-side surface of the spectacle lens: 25 mm
- Decentering amount: -5mm (diagonally downward toward the optical axis)
- Decentering angle: 32.5 degrees (angle formed with respect to the optical axis in a diagonal downward direction toward the optical axis)

FIG. 11 is a model plot of Example 1 before aspheric correction. This specification sows a case where the base curve in the model plot has a pitch of 0.125 D, and the vertical dioptric power has a pitch of 0.25 D.

The dashed dotted line indicates the case where the generation amount of astigmatism is zero (y=0). The solid line indicates the plot of the decenter sensitivity, and the dotted line indicates the plot of the tilt sensitivity. (The base curve value + 0.25D when the y-axis value in the plot of the tilt sensitivity is zero) was set as an upper limit, and the value at which the base curve value of the balance solution was the intermediate value was set as a lower limit.

The explanation in this paragraph also applies to the subsequent figures.

In FIG. 11, the balance solution of the spectacle lens (x-axis value at the intersection of both plots) is approximately 1.60D. Therefore, as far as the state before aspheric correction is concerned, when the base curve of the spectacle lens is 1.60D or a value close to that, the generation amount of astigmatism becomes robust against the vertical deviation amount of the lens.

On the other hand, the generation amount of astigmatism in the balance solution (y-axis value) is not zero.

Further, some manufacturers may not have manufacturing facilities for the base curve at or close to 1.60D, but may only have manufacturing facilities for the base curve of, for example, 4.00 to 5.00D. Therefore, it is preferable to perform aspheric correction to the spectacle lens of FIG. 11.

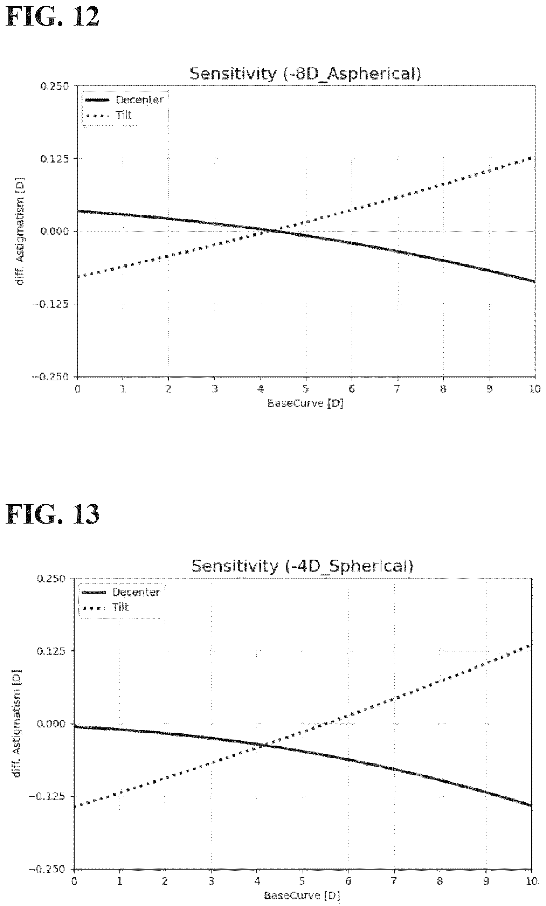

FIG. 12 is a model plot of Example 1 after aspheric correction.

The specific content of the aspheric correction step is as follows.

In Example 1, the following z-value is added to the z-coordinate value (sag amount) of the eyeball-side surface of the spectacle lens used in FIG. 11.

$$z = -0.84 \cdot 10^{\wedge}-6 \cdot (x^{\wedge}2+y^{\wedge}2)^{\wedge}2$$

Due to the aspheric correction step, the generation amount of astigmatism (y-axis value) in the balance solution becomes zero. Further, the base curve value of the balance solution could be placed within a range of 4.00 to 5.00 D of the base curve that the manufacturer could handle using its manufacturing facility.

<Example 2>

The differences from the Example 1 are as follows.
- Vertical dioptric power in the central clear region 2, the base region in the functional region 3, and the outer clear region 4 on the object-side surface: -4.00D
- Horizontal refractive power of the central clear region 2, the base region in the functional region 3, and the outer clear region 4 on the object-side surface: -4.00D
- Decentering amount: -7 mm (diagonally downward toward the optical axis)

FIG. 13 is a model plot of Example 2 before aspheric correction.
In FIG. 13, the balance solution of the spectacle lens (x-axis value at the intersection of both plots) is approximately 4.25D. At this time, the decenter sensitivity, which is the generation amount of astigmatism, was 0.042D, and the tilt sensitivity was 0.042D.
A suitable upper limit value according to one aspect of the present invention was the (base curve value + 0.25D when the y-axis value in the tilt sensitivity plot was zero) ≈ 5.50D. At this time, the decenter sensitivity, which is the generation amount of astigmatism, was 0.062 D, and the tilt sensitivity was zero.
A preferable lower limit was 3.00 D. In this case, the decenter sensitivity, which is the generation amount of astigmatism, was 0.022 D, and the tilt sensitivity was 0.071 D.

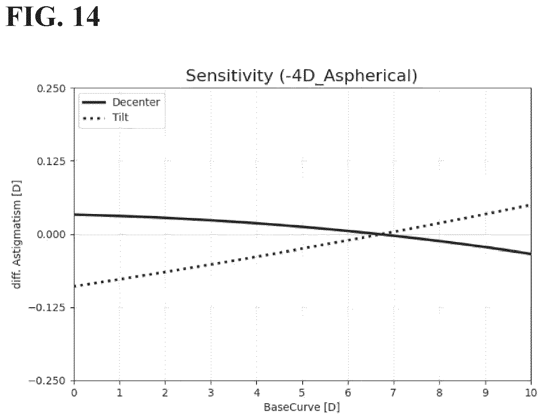

FIG. 14 is a model plot of Example 2 after aspheric correction.
In Example 2, the following z-value is added to the z-coordinate value (sag amount) of the eyeball-side surface of the spectacle lens used in FIG. 13.

$$z = -0.41 \cdot 10^{-6} \cdot (x^2 + y^2)^2$$

Due to the aspheric correction step, the generation amount of astigmatism (y-axis value) in the balance solution becomes zero.

Description of signs and numerals

1: Spectacle lens
2: Central clear region
3: Functional region
3a: Retinal non-convergence region (convex region)
3b: Base region
4: Outer clear region
PE: Pupil center
RE: Rotation center
L1: Light beam from above in the vertical direction (+Y direction)
L2: Light beam from the center in the vertical direction (optical axis)
L3: Light beam from below in the vertical direction (-Y direction)
100: Conventional general spectacle lens that does not have the effect of suppressing the progression of refractive error

**Claims**

1. A method for designing a spectacle lens that has an effect of inhibiting a progression of myopia or reducing hyperopia, the spectacle lens including: a central clear region that is a region including an eye point, which causes a light beam entering from an object-side surface to exit from an eyeball-side surface, enter a wearer's pupil, and converge on a retina to achieve a prescribed refractive power; and an annular functional region surrounding the central clear region,

the functional region including: a base region that allows the light beam entering from the object-side surface to exit from the eyeball-side surface, enter the wearer's pupil, and converge on the retina to achieve the prescribed refractive power; and an on-retinal non-convergence region that allows the light beam entering from the object-side surface to exit from the eyeball-side surface, while not allowing the light beam that enters the wearer's pupil to converge on the retina,
the method including:

a modeling step of dividing a pattern into multiple models with a deviation from a normally worn state of the spectacle lens as decentering,
to prepare the following models as the multiple models:

a reference model that represents a pupil center and a rotation center when observing an object through a central clear region;
a decenter model in which the rotation center and the pupil center of the reference model are translated by the same distance vertically; and
a tilt model in which only the rotation center moves vertically from a reference state by the same amount as a translation amount in the decenter model, and the pupil center does not move from a straight line passing through the rotation center and the pupil center of the reference model;
a sensitivity calculation step of calculating a decenter sensitivity and a tilt sensitivity, wherein a common object surface is set for each model, and a central light beam is set, which is a light beam emitted from a point on the object surface and passing through the pupil center and the rotation center of each of the models, and a difference between an astigmatism of the central light beam in the decenter model and an astigmatism of the central light beam in the reference model is defined as the decenter sensitivity, and a difference between an astigmatism of the central light beam in the tilt model and an astigmatism of the central light beam in the reference model is defined as the tilt sensitivity; and
a design step of using a base curve value in the vicinity of a balance solution as a base curve of the spectacle lens, wherein a base curve value c [unit: diopter (D)] which is a curvature of a surface in a region H where the on-retinal non-convergence region is not provided on an object-side surface is taken as x-axis, and the decenter sensitivity and the tilt sensitivity [unit: diopter (D)] are taken as y-axis, and an intersection of a plot of the decenter sensitivity and a plot of the tilt sensitivity is taken as the balance solution.

2. The method for designing a spectacle lens according to claim 1, wherein the base curve of the spectacle lens used in the design step falls within a range with an upper limit being (+ 0.25D when y-axis value in the plot of the tilt model is zero) and a lower limit being a value determined so that the base curve value of the balance solution is an intermediate value.

3. The method for designing a spectacle lens according to claim 2,
wherein the design step includes an aspheric correction step of:

performing aspheric correction to at least one of the region H on the object-side surface of the spectacle lens and the region H' on the eyeball-side surface where the on-retinal non-convergence region is not provided; and
moving an intersection of the plots in y-axis direction to bring a value of a generation amount of astigmatism in the balance solution closer to zero.

4. The method for designing a spectacle lens according to claim 2, the method including:

a base curve determination step of determining a base curve value of the spectacle lens in advance before the design step,
wherein the design step includes an aspheric correction step of performing aspheric correction to at least one of the region H on the object-side surface of the spectacle lens and the region H' on the eyeball-side surface where the on-retinal non-convergence region is not provided; and moving an intersection of the plots in an x-axis direction to bring a base curve value in the balance solution closer to a base curve value determined in the base curve determination step.

5. The method for designing a spectacle lens according to claim 2, the method including:

a base curve determination step of determining a base curve value of the spectacle lens in advance, before the design step,

wherein the design step includes:

an aspheric correction step of performing aspheric correction to at least one of the region H on the object-side surface of the spectacle lens and the region H' on the eyeball-side surface where the on-retinal non-convergence region is not provided; and moving an intersection of the plots in an x-axis direction to bring the base curve value in the balance solution closer to the base curve value determined in the base curve determination step, and moving the intersection of the plots in a y-axis direction to bring a value of a generation amount of astigmatism in the balance solution closer to zero.

6. The method for designing a spectacle lens according to any one of claims 3 to 5, wherein the aspheric surface correction step is performed by adding a sag amount including a fourth-order function component to at least one of the region H and the region H'.

7. The method for designing a spectacle lens according to claim 6, wherein in the aspheric correction step, aspheric correction is performed to the region H' on the eyeball-side surface of the spectacle lens.

8. The method for designing a spectacle lens according to claim 1, wherein the object-side surface is a spherical surface centered on a rotation center of the reference model.

9. A method for producing a spectacle lens having an effect of inhibiting a progression of myopia or reducing hyperopia, the spectacle lens including: a central clear region that is a region including an eye point, which causes a light beam entering from an object-side surface to exit from an eyeball-side surface, enter a wearer's pupil, and converge on a retina to achieve a prescribed refractive power; an annular functional region surrounding the central clear region, the functional region including: a base region that allows the light beam entering from the object-side surface to exit from the eyeball-side surface, enter the wearer's pupil, and converge on the retina to achieve the prescribed refractive power; and an on-retinal non-convergence region that allows the light beam entering from the object-side surface to exit from the eyeball-side surface, while not allowing the light beam to enter the wearer's pupil to converge on the retina,

the method including:

a modeling step of dividing a pattern into multiple models with a deviation from a normally worn state of the spectacle lens as decentering,
to prepare the following models as the multiple models:

a reference model that represents a pupil center and a rotation center when observing an object through a central clear region,
a decenter model in which the rotation center and the pupil center of the reference model are translated by the same distance vertically, and
a tilt model in which only the rotation center moves vertically from a reference state by the same amount as a translation amount in the decenter model, and the pupil center does not move from a straight line passing through the rotation center and the pupil center of the reference model,
a sensitivity calculation step of calculating a decenter sensitivity and a tilt sensitivity,
wherein a common object surface is set for each model,
a central light beam is set, which is a light beam emitted from a point on the object surface and passing through the pupil center and the rotation center of each of the models, and a difference between an astigmatism of the central light beam in the decenter model and an astigmatism of the central light beam in the reference model is defined as the decenter sensitivity, and a difference between an astigmatism of the central light beam in the tilt model and an astigmatism of the central light beam in the reference model is defined as the tilt sensitivity; and
a design step of using a base curve value in the vicinity of a balance solution as a base curve of the spectacle lens, wherein a base curve value c [unit: diopter (D)] which is a curvature of a surface in a region H where the on-retinal non-convergence region is not provided on an object-side surface is taken as x-axis, and the decenter sensitivity and the tilt sensitivity [unit: diopter (D)] are taken as y-axis, and an intersection of a plot of the decenter sensitivity and a plot of the tilt sensitivity is taken as the balance solution; and
a manufacturing step of manufacturing the spectacle lens based on the design step.

10. A spectacle lens that has an effect of inhibiting a progression of myopia or reducing hyperopia, the spectacle lens including:

a central clear region that is a region including an eye point, which causes a light beam entering from an object-side surface to exit from an eyeball-side surface, enter a wearer's pupil, and converge on a retina, to achieve a prescribed refractive power; and
an annular functional region surrounding the central clear region,
the functional region including:

a base region that allows a light beam entering from the object-side surface to exit from the eyeball-side surface, enter the wearer's pupil, and converge on the retina to achieve the prescribed refractive power; and
an on-retinal non-convergence region that allows the light beam entering from the object-side surface to exit from the eyeball-side surface, while not allowing the light beam to enter the wearer's pupil to converge on the retina,
wherein in a planar view, an outer edge of the functional region is larger than a circle centering on the eyepoint and having a diameter of 35 mm, and
a base curve value c [unit: diopter (D)] which is a curvature of a surface in a region H where the on-retinal non-convergence region is not provided on the object-side surface satisfies the following formula:

$$2Cs\text{-}Ct\text{-}0.25 \leq c \leq Ct+0.25$$

$$Cs=11.4(N\text{-}1)+0.65S$$

$$Ct=13.8(N\text{-}1)+0.65S$$

N: refractive index of spectacle lens
S: vertical refractive power in region H.

11. The spectacle lens according to claim 10,
wherein the value c in the region H satisfies the following formula:

$$Cs\text{-}0.25 \leq c \leq Ct+0.25.$$

12. The spectacle lens according to claim 11,
wherein the value c in the region H satisfies the following formula:

$$2Cs+2a\cdot As\text{-}2Ct\text{-}a\cdot At\text{-}0.25 \leq c \leq Ct+a\cdot At+0.25$$

$$As=(24.9+1.96S)(N\text{-}1)^{\wedge}2$$

$$At=(9.7+0.65S)(N\text{-}1)^{\wedge}2.$$

13. The spectacle lens according to claim 12,
wherein the value c in the region H satisfies the following formula:

$$Cs+a\cdot As\text{-}0.25 \leq c \leq Ct+a\cdot At+0.25.$$

14. The spectacle lens according to claim 12, wherein the value c in the region H satisfies the following formula:

$$|(Cs+a\cdot As)\text{-}(Ct+a\cdot At)| \leq 0.25.$$

15. The spectacle lens according to claim 10, wherein in a planar view, the central clear region is sized to encompass a circle having a diameter of 4 mm centered on an eye point, and is sized to be encompassed within a circle having a diameter of 16 mm centered on the eye point.

16. The spectacle lens according to claim 15, wherein an area of the on-retinal non-convergence region in a planar view in the functional region is 20% or more and 80% or less of an entire functional region.

17. The spectacle lens according to claim 16, wherein the value c in the region H satisfies the following formula:

$$Cs-0.25 \leq c \leq Ct+0.25$$

$$Cs+2a.As-0.25 \leq c \leq Ct+a.At+0.25$$

$$|(Cs+a.As)-(Ct+a.At)| \leq 0.25$$

$$As=(24.9+1.96S)(N-1)^{\wedge}2$$

$$At=(9.7+0.65S)(N-1)^{\wedge}2.$$

18. A pair of eyeglasses including the spectacle lens according to any one of claims 10 to 17 and a frame.

**FIG. 1**

FIG. 2

**FIG. 3**

**FIG. 4**

## FIG. 5

# FIG. 6

# FIG. 7

## FIG. 8

N=1.5 Spherical

## FIG. 9

N=1.6 Spherical

# FIG. 10

**N=1.6 Aspherical+1e-6**

# FIG. 11

**Sensitivity (-8D_Spherical)**

## FIG. 12

Sensitivity (-8D_Aspherical)

## FIG. 13

Sensitivity (-4D_Spherical)

# FIG. 14

## INTERNATIONAL SEARCH REPORT

| International application No. |
| --- |
| **PCT/JP2023/026353** |

| A. | CLASSIFICATION OF SUBJECT MATTER |
| --- | --- |

*G02C 7/02*(2006.01)i; *G02C 7/06*(2006.01)i
FI:   G02C7/02; G02C7/06

According to International Patent Classification (IPC) or to both national classification and IPC

| B. | FIELDS SEARCHED |
| --- | --- |

Minimum documentation searched (classification system followed by classification symbols)

    G02C7/02; G02C7/06

Documentation searched other than minimum documentation to the extent that such documents are included in the fields searched

    Published examined utility model applications of Japan 1922-1996
    Published unexamined utility model applications of Japan 1971-2023
    Registered utility model specifications of Japan 1996-2023
    Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2020/045567 A1 (HOYA LENS THAILAND LTD.) 05 March 2020 (2020-03-05) | 1-9 |
| | claim 1, paragraphs [0022], [0025], fig. 1, 5 | |
| Y | | 10-18 |
| A | WO 2021/001524 A1 (ESSILOR INTERNATIONAL) 07 January 2021 (2021-01-07) | 1-9 |
| | page 9, lines 14, 15, page 11, lines 22-24, fig. 1b | |
| Y | | 10-18 |
| A | WO 2020/261213 A1 (BRIEN HOLDEN VISION INSTITUTE LIMITED) 30 December 2020 (2020-12-30) | 1-9 |
| | paragraphs [0002], [0150], fig. 16 | |
| Y | | 10-18 |
| A | JP 2019-174727 A (HOYA LENS THAILAND LTD.) 10 October 2019 (2019-10-10) | 1-9 |
| | paragraphs [0016], [0017], [0029], [0032], fig. 12 | |
| Y | | 10-18 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **04 September 2023** | **10 October 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

| International application No. |
| --- |
| **PCT/JP2023/026353** |

### C. DOCUMENTS CONSIDERED TO BE RELEVANT

| Category* | Citation of document, with indication, where appropriate, of the relevant passages | Relevant to claim No. |
| --- | --- | --- |
| A | JP 2017-510851 A (MENICON SINGAPORE PTE. LTD.) 13 April 2017 (2017-04-13) paragraphs [0058], [0083]-[0088], fig. 12-17 | 1-9 |
| Y | | 10-18 |
| A | US 2021/0048690 A1 (ESSILOR INTERNATIONAL) 18 February 2021 (2021-02-18) paragraphs [0138], [0154], [0218], fig. 1 | 1-9 |
| Y | | 10-18 |
| X | JP 2022-093412 A (ESSILOR INTERNATIONAL) 23 June 2022 (2022-06-23) claim 1, paragraphs [0018], [0082], [0107], fig. 1 | 10-18 |
| A | | 1-9 |
| Y | JP 2021-015308 A (ITO KOGAKU KOGYO KK) 12 February 2021 (2021-02-12) examples | 10-18 |
| Y | JP 2018-180047 A (FUJIFILM CORP.) 15 November 2018 (2018-11-15) examples | 10-18 |
| Y | JP 2017-058632 A (ITO KOGAKU KOGYO KK) 23 March 2017 (2017-03-23) examples | 10-18 |

Form PCT/ISA/210 (second sheet) (January 2015)

## INTERNATIONAL SEARCH REPORT

| International application No. |
| --- |
| **PCT/JP2023/026353** |

**Box No. III    Observations where unity of invention is lacking (Continuation of item 3 of first sheet)**

This International Searching Authority found multiple inventions in this international application, as follows:

(Invention 1) Claims 1-9
  Claims 1-8 have a special technical feature as defined in claim 1, and thus are classified as invention 1.
  Claim 9 substantially has the special technical feature, and thus is classified as invention 1.

(Invention 2) Claims 10-18
  Claims 10-18 share, with claim 1 classified as invention 1, the technical features of relating to a spectacle lens that exhibits a myopia progress retarding effect or a hyperopia reducing effect, providing a central clear region and an annular functional region, and the like. However, these technical features do not make a contribution over the prior art in light of the disclosure of documents 1-7, and thus cannot be considered special technical features. Apart from these features, there are not the same or corresponding special technical features among these inventions.
  Furthermore, claims 10-18 do not depend from claim 1. In addition, claims 10-18 are not substantially identical to or similarly closely related to any of the claims classified as invention 1.
  Accordingly claims 10-18 cannot be identified as invention 1.

1. [✓] As all required additional search fees were timely paid by the applicant, this international search report covers all searchable claims.

2. [ ] As all searchable claims could be searched without effort justifying additional fees, this Authority did not invite payment of additional fees.

3. [ ] As only some of the required additional search fees were timely paid by the applicant, this international search report covers only those claims for which fees were paid, specifically claims Nos.:

4. [ ] No required additional search fees were timely paid by the applicant. Consequently, this international search report is restricted to the invention first mentioned in the claims; it is covered by claims Nos.:

**Remark on Protest**    [ ] The additional search fees were accompanied by the applicant's protest and, where applicable, the payment of a protest fee.

[ ] The additional search fees were accompanied by the applicant's protest but the applicable protest fee was not paid within the time limit specified in the invitation.

[✓] No protest accompanied the payment of additional search fees.

Form PCT/ISA/210 (continuation of first sheet) (January 2015)

**INTERNATIONAL SEARCH REPORT**
Information on patent family members

International application No.

**PCT/JP2023/026353**

| Patent document cited in search report | | | Publication date (day/month/year) | Patent family member(s) | | | Publication date (day/month/year) |
|---|---|---|---|---|---|---|---|
| WO | 2020/045567 | A1 | 05 March 2020 | US | 2021/0341751 | A1 | |
| | | | | claim 1, paragraphs [0045], [0048]-[0056], fig. 1, 5 | | | |
| | | | | EP | 3845956 | A1 | |
| WO | 2021/001524 | A1 | 07 January 2021 | JP | 2022-539255 | A | |
| | | | | US | 2022/0357595 | A1 | |
| | | | | EP | 3761104 | A1 | |
| | | | | CN | 114072719 | A | |
| | | | | KR | 10-2022-0024168 | A | |
| | | | | AU | 2020299826 | A | |
| | | | | BR | 112021026183 | A | |
| WO | 2020/261213 | A1 | 30 December 2020 | JP | 2022-539018 | A | |
| | | | | US | 2022/0350169 | A1 | |
| | | | | EP | 3990977 | A1 | |
| | | | | KR | 10-2022-0027213 | A | |
| | | | | CN | 114286963 | A | |
| | | | | CA | 3144870 | A | |
| | | | | AU | 2020307664 | A | |
| | | | | BR | 112021026412 | A | |
| | | | | TW | 202109143 | A | |
| JP | 2019-174727 | A | 10 October 2019 | US | 2020/0132441 | A1 | |
| | | | | paragraphs [0028], [0029], [0044]-[0048], fig. 12 | | | |
| | | | | WO | 2019/189847 | A1 | |
| | | | | EP | 3779573 | A1 | |
| JP | 2017-510851 | A | 13 April 2017 | US | 2017/0184875 | A1 | |
| | | | | paragraphs [0058], [0083]-[0088], fig. 12-17 | | | |
| | | | | WO | 2015/147758 | A1 | |
| | | | | EP | 3123236 | A1 | |
| | | | | SG | 10201400920R | A | |
| | | | | TW | 201543107 | A | |
| | | | | AU | 2015237324 | A | |
| | | | | CA | 2943523 | A | |
| | | | | KR | 10-2016-0136429 | A | |
| | | | | CN | 106461969 | A | |
| | | | | RU | 2016141338 | A | |
| US | 2021/0048690 | A1 | 18 February 2021 | JP | 2021-522549 | A | |
| | | | | WO | 2019/166659 | A1 | |
| | | | | EP | 3553594 | A1 | |
| | | | | DE | 212019000204 | U | |
| | | | | CN | 110221454 | A | |
| | | | | KR | 10-2020-0123141 | A | |
| | | | | CN | 213122475 | U | |
| | | | | CA | 3092418 | A | |
| | | | | SG | 11202008010S | A | |
| | | | | BR | 112020017525 | A | |
| | | | | KR | 10-2022-0049606 | A | |
| | | | | RU | 2765344 | C | |
| | | | | TW | 202001353 | A | |
| JP | 2022-093412 | A | 23 June 2022 | US | 2020/0393702 | A1 | |

Form PCT/ISA/210 (patent family annex) (January 2015)

## INTERNATIONAL SEARCH REPORT
### Information on patent family members

International application No.

**PCT/JP2023/026353**

| Patent document cited in search report | | | Publication date (day/month/year) | Patent family member(s) | Publication date (day/month/year) |
|---|---|---|---|---|---|
| | | | | claim 1, paragraphs [0068], [0177], [0202], fig. 1 | |
| | | | | EP 3553594 A1 | |
| | | | | DE 212019000204 U | |
| | | | | BR 202019004173 U | |
| | | | | CN 110221454 A | |
| | | | | KR 10-2020-0123141 A | |
| | | | | CA 3092418 A | |
| | | | | SG 11202008010S A | |
| | | | | BR 112020017525 A | |
| JP | 2021-015308 | A | 12 February 2021 | (Family: none) | |
| JP | 2018-180047 | A | 15 November 2018 | (Family: none) | |
| JP | 2017-058632 | A | 23 March 2017 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20170131567 A
- WO 2020067028 A
- WO 2019166655 A
- JP 3852116 B
- WO 2017200576 A